# EUROPEAN PATENT SPECIFICATION

(11) **EP 2 424 910 B1**
(45) Date of publication and mention of the grant of the patent: **16.07.2014**
(21) Application number: 10715830.5
(22) Date of filing: 26.04.2010
(51) Int. Cl.: C08F 279/02, C08F 292/00, C08L 51/06, C08L 51/10, C08G 81/00, C09D 5/16, C09D 151/06, C09D 151/10

(54) **ORGANIC-INORGANIC COMPOSITE PARTICLES**
ORGANISCH-ANORGANISCHE VERBUNDTEILCHEN
PARTICULES COMPOSITES ORGANIQUES-INORGANIQUES

(30) Priority: 27.04.2009 EP 09158874
(43) Date of publication of application: 07.03.2012
(73) Proprietor: BASF SE, 67056 Ludwigshafen (DE)
(72) Inventor: MÜHLEBACH, Andreas, CH-5070 Frick (CH); RIME, François, CH-2800 Delémont (CH); PETER, Wolfgang, 68804 Altussheim (DE); POWELL, Karin, 79540 Lörrach (DE)
(74) Representative: Maiwald Patentanwalts GmbH
(86) International application number: PCT/EP2010/055524
(87) International publication number: WO 2010/125024

(56) References cited:
- US-A- 4 293 476
- CANNIZZO C ET AL: "Covalent hybrid materials based on nanolatex particles and dawson polyoxometalates" ADVANCED MATERIALS 20051205 WILEY-VCH VERLAG DE, vol. 17, no. 23, 5 December 2005 (2005-12-05), pages 2888-2892, XP002536186 cited in the application

## Description

The present invention refers to organic-inorganic composite particles, to compositions comprising these particles and to substrates coated with these compositions, as well as to processes for the preparation of the particles, the compositions and the coated substrates.

Long lasting performance and good aesthetics are the key performance components for exterior architectural coatings. Over time, exterior exposure leads to the accumulation of dirt, air pollutants, dust particles, and debris on the coating. This results in a dirty appearance which no longer meets the expectations of the consumer. It is well known in the industry that a high level of dirt resistance can be achieved by increasing the hardness of the coating. The hardness of the coating can be increased, for example, through the use of inorganic material particles. In order to also ensure a good film elasticity and sufficient coalescence a soft organic polymer, which is a polymer having a low glass transition temperature (Tg), is required in the coating. As mixing of a soft organic polymer and inorganic material particles normally leads to agglomeration of the inorganic material particles and thus inhomogeneous distribution of the inorganic material particles in the coating, the inorganic material particles and the soft organic polymer can be fixed in organic-inorganic composite particles.

EP 1 235 869 (BASF) describes a process for the preparation of organic-inorganic composite particles comprising an addition polymer and finely divided nano inorganic material, in which process a mixture of ethylenically unsaturated monomers is dispersely distributed in aqueous medium and is polymerized by the method of free-radical aqueous emulsion polymerization in the presence of at least one dispersely distributed, finely divided nano inorganic material. From the preparation process it is apparent that the nano inorganic material particles are embedded in the addition polymer instead of being linked to the addition polymer through covalent bonds.

C. Cannizzo et al. Advanced Materials 2005, 17, 2888 to 2892 describes organic-inorganic composite particles wherein the nano inorganic material particles are linked to the organic polymer through covalent bonds. These organic-inorganic composite particles are prepared by reacting chlorobenzyl-functionalized polymer nanoparticles, NL-CH₂-Cl, having an average diameter of 25 nm with an organically modified polyoxometalate (POM-SH) of formula [P₂W₁₇O₆₁(SiC₃H₆SH)₂O]⁶⁻. The chlorobenzyl-functionalized polymer nanoparticles are prepared by copolymerization of styrene, vinyl benzyl chloride and divinylbenzene in an oil-in-water microemulsion. The organic-inorganic composite particles have an average diameter of 25 nm and an organic matter content of 77.5% (w/w) as determined by thermogravimetric analysis (TGA). The organic-inorganic composite particles described by C. Cannizzo et al. do not comprise a soft organic polymer and are thus not suitable for use in architectural coatings.

It is the object of the present invention to provide coating compositions, preferably for use in architectural coatings, which coating compositions yield coatings of improved dirt resistance.

This object is solved by the organic-inorganic composite particles of claim 1, the composition of claim 13, the substrate of claim 15, the processes of claims 12, 14 and 16, and particles A of claim 19.

The organic-inorganic composite particles of the present invention have an average diameter of 60 to 12'000 nm and are obtainable by reacting particles A, which are particles carrying at least one functional group Ra, with particles B, which are particles carrying at least one functional group Rb, under formation of a covalent linkage between particles A and particles B.

Preferably, the organic-inorganic composite particles have an average diameter of 60 to 1'400 nm, more preferably of 100 to 700 nm, even more preferably of 130 to 420 nm, most preferably of 160 to 280 nm.

Particles A can have an average diameter of 50 to 10'000 nm. Preferably, particles A have an average diameter of 50 to 1'000 nm, more preferably of 80 to 500 nm, even more preferably of 100 to 300 nm, most preferably of 120 to 200 nm.

Particles B can have an average diameter of 5 to 1'000 nm. Preferably, particles B have an average diameter of 5 to 200 nm, more preferably of 10 to 100 nm, even more preferably 15 to 60 nm, most preferably of 20 to 40 nm.

The average diameter ratio of particles A/particles B can be from 1.2/1 to 50/1. Preferably, the average diameter ratio of particles A/particles B is from 1.5/1 to 50/1, more preferably from 2/1 to 20/1, even more preferably from 3/1 to 10/1 and most preferably from 4/1 to 6/1.

The average diameter can be determined by transmission or scanning electron microscopy (TEM, SEM), or by dynamic light scattering (DLS).

The organic-inorganic composite particles of the present invention can have an organic matter content of 10 to 90% by weight based on the weight of the organic-inorganic composite particles. The organic matter content of the organic-inorganic composite particles of the present invention is preferably, 20 to 80%, more preferably 30 to 70%, and most preferably 40 to 65% by weight based on the weight of the organic-inorganic composite particles. The organic matter content can be determined by thermographimetric analysis (TGA) (30-800 °C, 10 °C/min).

The organic-inorganic composite particles of the present invention can have a Zeta potential of above +25 mV or below -25 mV, preferably of above +30 mV or below -30 mV, at neutral pH. The Zeta potential can be determined by a Zeta Sizer coupled to dynamic light scattering (DLS).

Preferably, the organic-inorganic composite particles of the present invention are hydrophilic, i.e. when the organic-inorganic composite particles are incorporated into a coating, the static contact angle of water is smaller for this coating than for the same coating without having incorporated the organic-inorganic composite particles of the present invention.

Preferably, the organic-inorganic composite particles of the present invention have a raspberry-type structure, i.e. a structure wherein particles B are covering substantially the surface of particles A in a mono-layer. The raspberry-like structure of the organic-inorganic composite particles of the present invention can be determined by transmission and scanning electron microscopy (TEM, SEM).

The functional group Ra is preferably complementary with the functional group Rb. This means that the functional group Ra reacts with the functional group Rb, but that the functional group Ra and the functional group Rb not react among themselves. This causes particles B to connect to particle A via covalent linkage, without particles A connecting to particles A and particles B connecting to particles B.

Preferably, the covalent linkage between particles A and particles B is formed by a substitution reaction such as aliphatic nucleophilic substitution, or by an addition reaction such as addition to carbon-carbon multiple bonds or addition to carbon-hetero multiple bonds.

When the covalent linkage is formed by aliphatic nucleophilic substitution one of Ra and Rb can be i) a leaving group (LG_{I}), ii) an acyl group of the type -C(O)-LG_{II}, wherein LG_{II} is a leaving group, or iii) a heterocyclic three-membered ring, and the complementary Ra, respectively, Rb can be a nucleophilic group.

Examples of leaving groups LG_{I} and LG_{II} are -N≡N⁺, -OSO₂R¹, -OSO₂OR², -I, -Br, -Cl, -F, -[OH₂]⁺, [OR³H]⁺, -[NR⁴R⁵R⁶]⁺, -OC(O)R⁷, -OH, -OR⁸, -SR⁹, -NH₂, -NHR¹⁰ and -NR¹¹R¹², wherein R¹ to R¹² can be the same or different and can be unsubstituted or substituted C₁₋₃₀-alkyl, C₂₋₃₀-alkenyl, C₂₋₃₀-alkinyl, C₃₋₈-cycloalkyl, C₆₋₂₀-aryl and heteroaryl.

Leaving group LG_{I} is preferably selected from the group consisting of -N₂⁺, -OSO₂R¹, -OSO₂OR², -I, -Br, -Cl, -[OH₂]⁺, [OR³H]⁺, -[NR⁴R⁵R⁶]⁺ and -OC(O)R⁷, more preferably from the group consisting of -OSO₂R¹, -I, -Br, -Cl, -[NR⁴R⁵R⁶]⁺ and -OC(O)R⁷, even more preferably from the group consisting of tosyl, -I, -Br, -Cl and trimethylammonium, and most preferably, LG_{I} is -Cl.

Leaving groups LG_{II} is preferably selected grom the group consisting of -I, -Br, -Cl, -OC(O)R⁷, -OH, -OR⁸, -SR⁹, NH₂, NHR¹⁰ and NR¹¹R¹².

The heterocyclic three-membered ring can be of formula 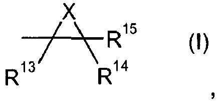 wherein X can be O or NH, and R¹³, R¹⁴ and R¹⁵ can be the same or different and can be hydrogen, unsubstituted or substituted C₁₋₃₀-alkyl, C₂₋₃₀-alkenyl, C₂₋₃₀-alkinyl, C₃₋₈-cycloalkyl, C₆₋₂₀-aryl and heteroaryl.

Examples of nucleophilic groups are -OH, -NH₂, -NH-, -NHR¹⁰, -NR¹¹R¹², -SH, -C(O)O⁻, -OSO₂O⁻, -SO₂O⁻, -C≡C⁻ and -CH⁻, wherein R¹⁰ to R¹² can be the same or different and can be unsubstituted or substituted C₁₋₃₀-alkyl, C₂₋₃₀-alkenyl, C₂₋₃₀-alkinyl, C₃₋₈-cycloalkyl, C₆₋₂₀-aryl and heteroaryl. Preferably, the nucleophilic group is selected from the group consisting of-OH, -NH₂, -NH-, -NHR¹⁰, -NR¹¹R¹², -SH and -C(O)O⁻, more preferably, from the group consisting of -OH, -NH₂, -NH-, -NHR¹⁰, -NR¹¹R¹² and -SH, even more preferably, from the group consisting of -NH₂, -NH-, -NHR¹⁰, -NR¹¹R¹², and most preferably, the nucleophilic group is-NH-.

When the covalent linkage is formed by addition to carbon-carbon multiple bonds one of Ra and Rb can be, for example, -CR¹⁶=CR¹⁷R¹⁸ or -C≡CR¹⁹, and the complementary Ra, respectively, Rb can be, for example, -CR²⁰=CR²¹-CR²²=CR²³R²⁴, -CR²⁵=CR²⁶=CR²⁷=CR^{2a}- or -N₃, wherein R¹⁶ to R²⁸ can be the same or different and can be hydrogen, or unsubstituted or substituted C₁₋₃₀-alkyl, C₂₋₃₀-alkenyl, C₂₋₃₀-alkinyl, C₃₋₈-cycloalkyl, C₆₋₂₀-aryl and heteroaryl.

When the covalent linkage is formed by addition to carbon-hetero multiple bonds one of Ra and Rb can be -N=C=O, -N=C=N-, -C(O)R²⁹ or -C(O)H, and the complementary Ra, respectively, Rb can be, for example a nucleophilic group such as -OH, -NH₂, -NHR³⁰, -NR³¹R³², -SH, -C(O)O⁻, -OSO₂O⁻, -SO₂O⁻, wherein R²⁹ to R³² can be the same or different and can be unsubstituted or substituted C₁₋₃₀-alkyl, C₂₋₃₀-alkenyl, C₂₋₃₀-alkinyl, C₃₋₈-cycloalkyl, C₆₋₂₀-aryl and heteroaryl.

Examples of C₁₋₃₀-alkyl are methyl, ethyl, propyl, isopropyl, butyl, *tert*-butyl, *sec*-butyl, isobutyl, pentyl, hexyl, heptyl, octyl, nonyl, decyl and dodecyl. Examples of C₂₋₃₀-alkenyl are vinyl and allyl. Examples of C₃₋₈-cycloalkyl are cyclopropyl, cyclobutyl, cyclopentyl, cyclohexyl and cycloheptyl. An example of C₆₋₂₀-aryl is phenyl. An example of a heteroaryl is pyridyl. C₁₋₃₀-alkyl, C₂₋₃₀-alkenyl, C₂₋₃₀-alkinyl, C₃₋₈-cycloalkyl, C₆₋₂₀-aryl and heteroaryl can be substituted by any possible substituent, for example C₁₋₃₀-alkyl could by substituted by C₃₋₈-cycloalkyl, C₆₋₂₀-aryl and heteroaryl, and C₆₋₂₀-aryl could be substituted by C₁₋₃₀-alkyl and C₃₋₈-cycloalkyl.

Preferably, the covalent linkage is formed by aliphatic nucleophilic substitution or by addition to carbon-carbon multiple bonds. More preferably, the covalent linkage is formed by aliphatic nucleophilic substitution. Most preferably, the covalent linkage is formed by aliphatic nucleophilic substitution, wherein one of Ra and Rb is a leaving group (LG_{I}), and the complementary Ra, respectively, Rb is a nucleophilic group. Even most preferably, the covalent linkage is formed by aliphatic nucleophilic substitution, wherein Ra is a leaving group (LG_{I}), and Rb is a nucleophilic group.

Preferably, particles A comprise an organic polymer Pa.

The organic polymer Pa has preferably a glass transition temperature of below 50 °C, for example in the range of from -50 to 50°C, preferably of below 30 °C, for example, in the range of -20 to 30 °C, more preferably in the range of -10 to 25 °C and most preferably in the range of 0 to 20 °C. The glass transition temperature can be determined by differential scanning calorimetry (DSC) at 10 °C/min.

The organic polymer Pa can be an organic polymer Pa1, which is an organic polymer carrying at least one functional group Ra.

Examples of organic polymers Pa1 are butadiene-based polymers, which have been chemically modified by grafting thereon a polymer carrying at least one functional group Ra.

The butadiene-based polymers, which have been chemically modified by grafting thereon a polymer carrying at least one functional group Ra, can be prepared by polymerizing at least one ethylenically unsaturated monomer carrying at least one functional group Ra, at least one ethylenically unsaturated monomer carrying at least two ethylenically unsaturated groups, and optionally further ethylenically unsaturated monomers, in the presence of a butadiene-based polymer and an initiator.

Examples of butadiene-based polymers are polybutadiene and butadiene-based copolymers.

Examples of butadiene-based copolymers are styrene/butadiene copolymer, acrylonitrile/butadiene/styrene (ABS) copolymer and olefin/butadiene copolymers such ethylene/butadiene copolymer and propylene/butadiene copolymer.

Preferably, the butadiene-based polymer is a butadiene-based copolymer, more preferably, it is styrene/butadiene copolymer, for example as sold under the tradename Ciba® Latexia® 302.

Butadiene-based polymers are either commercially available, such as the styrene/butadiene copolymer sold under the tradename Ciba® Latexia® 302, or can be prepared by standard polymerization methods, for example by free radical polymerization as described in K. Matyjaszewski, T.P. Davis "Handbook of Radical Polymerisation", John Wiley and Sons, Hoboken, USA, 2002.

Examples of ethylenically unsaturated monomers carrying at least one functional group Ra are 4-vinylbenzyl chloride, chloromethyl acrylate, 2-chloroethyl methacrylate, 2-chloroethyl acrylate, vinyl chloroacetate, 2-chloroethyl vinyl ether, vinyl chloroacetate, (4-vinylbenzyl)-trimethylammonium chloride, dimethylaminoethyl acrylate, dimethylaminoethyl methacrylate, allylamine and maleic anhydride. Preferred ethylenically unsaturated monomers carrying at least one functional group Ra are 4-vinylbenzyl chloride and 2-chloroethyl acrylate.

Examples of ethylenically unsaturated monomers carrying at least two ethylenically unsaturated groups are divinylbenzene, N,N-methylenebisacrylamide, polyethylene glycol diacrylate, polyethylene glycol dimethacrylate, 1,4-butandiol diacrylate, allyl acrylate and allyl methacrylate. The preferred ethylenically unsaturated monomer carrying at least two ethylenically unsaturated groups is divinylbenzene.

Examples of further ethylenically unsaturated monomers are styrene, C₁₋₃₀-alkyl acrylates such as methyl acrylate and butyl acrylate, C₁₋₃₀-alkyl methacrylates such as butyl methacrylate, olefins such as ethylene and propylene, and acrylonitrile. Preferred further ethylenically unsaturated monomers are styrene and C₁₋₃₀-alkyl acrylates such as butyl acrylate.

The weight ratio of butadiene-based polymer/(sum of at least one ethylenically unsaturated monomer carrying at least one functional group Ra, at least one ethylenically unsaturated monomer carrying at least two ethylenically unsaturated groups and optionally further ethylenically unsaturated monomers) can be 0.5/1 to 50/1. Preferably it is 1/1 to 20/1, more preferably, it is 1.5/1 to 10/1, most preferably, it is 2/1 to 5/1.

The amount of the ethylenically unsaturated monomer carrying at least one functional group Ra can be from 1 to 90%, preferably from 10 to 70%, more preferably from 20 to 60% and most preferably from 25 to 50% by weight based on the weight of the sum of ethylenically unsaturated monomers carrying at least one functional group Ra, ethylenically unsaturated monomers carrying at least two ethylenically unsaturated groups and optionally further ethylenically unsaturated monomers.

The amount of the ethylenically unsaturated monomers carrying at least two ethylenically unsaturated groups can be from 0.1 to 50%, preferably from 1 to 30%, more preferably from 2 to 20% and most preferably from 5 to 15% by weight based on the weight of the sum of ethylenically unsaturated monomers carrying at least one functional group Ra, ethylenically unsaturated monomers carrying at least two ethylenically unsaturated groups and optionally further ethylenically unsaturated monomers.

The amount of the further ethylenically unsaturated monomers, if present, can be from 1 to 90%, preferably from 20 to 80%, more preferably from 30 to 70% and most preferably from 40 to 65% by weight based on the weight of the sum of ethylenically unsaturated monomers carrying at least one functional group Ra, ethylenically unsaturated monomers carrying at least two ethylenically unsaturated groups and optionally further ethylenically unsaturated monomers.

Examples of initiators are free-radical initiators such as peroxides, persulfates, azo compounds or redox couples.

Examples of peroxides are hydrogen peroxide, ammonium, sodium or potassium peroxide, *tert*-butyl peroxide, *tert*-butyl hydroperoxide, cumene hydroperoxide and benzoyl peroxide. Examples of persulfates are ammonium, sodium or potassium persulfate. Examples of azo compounds are 2,2-azobisisobutyronitrile and 4,4'-azobis(4-cyanovaleric acid). Redox couples consist of an oxidizing agent and a reducing agent. The oxidizing agent can be one of the above listed peroxides, persulfates or azo compounds, or a sodium or potassium chlorate or bromate. Examples of reducing agents are ascorbic acid, glucose or ammonium, sodium or potassium hydrogen sulfite, sulfite, thiosulfate or sulfide, or ferrous ammonium sulfate.

A redox couple such as potassium persulfate/sodium hydrogen sulfite is the preferred initiator.

The polymerization is preferably carried out by slowly adding a monomer mixture consisting of at least one ethylenically unsaturated monomer carrying at least one functional group Ra, at least one ethylenically unsaturated monomer carrying at least two ethylenically unsaturated groups, and optionally further ethylenically unsaturated monomers, to the butadiene-based polymer.

The polymerisation is preferably carried out in aqueous medium, more preferably in water.

The polymerisation is preferably carried out at a temperature in the range of 20 to 100 °C, more preferably in the range of 40 to 80 °C.

Further examples of organic polymers Pa1 are butadiene-based polymers carrying at least one functional group Ra, C₁₋₃₀-alkyl acrylate-based polymers carrying at least one functional group Ra, for example methyl acrylate-based polymers carrying at least one functional group Ra or butyl acrylate-based polymers carrying at least one functional group Ra, and C₁₋₃₀-alkyl methacrylate-based polymers carrying at least one functional group Ra, for example butyl methacrylate-based polymers carrying at least one functional group Ra.

Butadiene-based polymers, C₁₋₃₀-alkyl acrylate-based polymers, respectively, C₁₋₃₀-alkyl methacrylate-based polymers carrying at least one functional group Ra can be polymers formed from butadiene, C₁₋₃₀-alkyl acrylate, respectively, C₁₋₃₀-alkyl methacrylate and at least one ethylenically unsaturated monomer carrying at least one group Ra, and optionally ethylenically unsaturated monomers carrying at least two ethylenically unsaturated groups and optionally further ethylenically unsaturated monomers in the presence of an initiator. Definitions of ethylenically unsaturated monomer carrying at least one group Ra, ethylenically unsaturated monomer carrying at least two ethylenically unsaturated groups, further ethylenically unsaturated monomers and initiator are given above.

Butadiene-based, C₁₋₃₀-alkyl acrylate-based polymers, respectively, C₁₋₃₀-alkyl methacrylate-based polymers carrying at least one functional group Ra can be prepared by standard polymerization procedures, for example by free radical polymerization as described in K. Matyjaszewski, T.P. Davis "Handbook of Radical Polymerisation", John Wiley and Sons, Hoboken, USA, 2002.

When the organic polymer Pa is organic polymer Pa1, particles A can comprise at least 55% by weight of the organic polymer Pa1 based on the weight of particle A. Preferably, particles A comprise at least 70%, more preferably at least 90% by weight of the organic polymer Pa1 based on the weight of particles A, and most preferably particles A consists of the organic polymer Pa1.

The organic polymer Pa can also be an organic polymer Pa2, which is surrounded (or encapsulated) by a shell polymer Sa, which is a polymer carrying at least one functional group Ra.

Examples of the organic polymers Pa2 are butadiene-based polymers, C₁₋₃₀-alkyl acrylate-based polymers, for example methyl acrylate-based polymers or butyl acrylate-based polymers, and C₁₋₃₀-alkyl methacrylate-based polymers, for example butyl methacrylate-based polymers.

Butadiene-based polymers, C₁₋₃₀-alkyl acrylate-based polymers, respectively, C₁₋₃₀-alkyl methacrylate-based polymers can be polymers formed from butadiene, C₁₋₃₀-alkyl acrylate, respectively, C₁₋₃₀-alkyl methacrylate, optionally ethylenically unsaturated monomers carrying at least two ethylenically unsaturated groups and optionally further ethylenically unsaturated monomers in the presence of an initiator.

Definitions of ethylenically unsaturated monomers carrying at least two ethylenically unsaturated groups, further ethylenically unsaturated monomers and initiators are given above.

Butadiene-based, C₁₋₃₀-alkyl acrylate-based polymers, respectively, C₁₋₃₀-alkyl methacrylate-based polymers can be prepared by standard polymerization procedures, for example by free radical polymerization as described in K. Matyjaszewski, T.P. Davis "Handbook of Radical Polymerisation", John Wiley and Sons, Hoboken, USA, 2002.

The shell polymer Sa can be inorganic or organic.

When the shell polymer Sa is organic it can be, for example a polymer, which is formed from at least one ethylenically unsaturated monomer carrying at least one functional group Ra, optionally ethylenically unsaturated monomers carrying at least two ethylenically unsaturated groups and optionally further ethylenically unsaturated monomers in the presence of an initiator. Examples of ethylenically unsaturated monomers carrying at least one functional group Ra, ethylenically unsaturated monomers carrying at least two ethylenically unsaturated groups, further ethylenically unsaturated monomers and initiators are given above. These polymers can be prepared by standard polymerization procedures, for example by free radical polymerization as described in K. Matyjaszewski, T.P. Davis "Handbook of Radical Polymerisation", John Wiley and Sons, Hoboken, USA, 2002.

When the shell polymer Sa is organic it can also be a polyalkyleneimine such as polyethyleneimine or polypropyleneimine, or a chemically modified polyalkyleneimine, or a polyetheramine, for example as sold under the tradename Jeffamine®.

Polyalkyleneimines can be prepared by polymerizing the alkyleneimine in the presence of a suitable catalyst, for example in the presence of a protic acid.

Chemically modified polyalkyleneimine can be prepared by reacting polyalkyleneimine with a molecule carrying either at least i) one leaving group (LG_{I}), ii) one acyl group of the type -C(O)-LG_{II}, wherein LG_{II} is a leaving group, iii) one heterocyclic three-membered ring, for example of formula 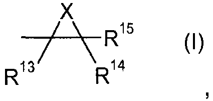 wherein X can be O or NH, or
at least iv) one -N=C=O, -N=C=N-, -C(O)R¹ or -C(O)H.

Examples of LG_{I} and LG_{II} as well as R¹³, R¹⁴ and R¹⁵ are given above.

The organic polymer Pa2 can be surrounded, respectively, encapsulated by the shell polymer Sa, for example, by preparing the shell polymer Sa in the presence of the organic polymer Pa2, or by mixing the organic polymer Pa2 with the shell polymer Sa.

For example, organic polymer Pa2 can be surrounded, respectively, encapsulated by a polymer formed from at least one ethylenically unsaturated monomer carrying at least one functional group Ra, optionally ethylenically unsaturated monomers carrying at least two ethylenically unsaturated groups and optionally further ethylenically unsaturated monomers by polymerizing at least one ethylenically unsaturated monomer carrying at least one functional group Ra, optionally ethylenically unsaturated monomers carrying at least two ethylenically unsaturated groups and optionally further ethylenically unsaturated monomers in the presence of the organic polymer Pa2 and in the presence of an initiator.

For example, the organic polymer Pa2 can be surrounded, respectively, encapsulated by polyalkyleneimine or chemically modified polyalkyleneimine by mixing the organic polymer Pa2 and polyalkyleneimine or chemically modified polyalkyleneimine.

When the organic polymer Pa1 is an organic polymer Pa2, which is surrounded (or encapsulated) by a shell polymer Sa, particles A can comprise at least 55%, at least 65%, at least 70% or at least 80% by weight of the organic polymer Pa2 based on the weight of particle A.

The weight ratio of organic polymer Pa2/shell polymer Sa can be from 55/45 to 99/1, from 65/35 to 95/5, from 70/30 to 95/1 or from 80/20 to 95/5.

Organic polymer Pa is preferably an organic polymer Pa1, which is an organic polymer carrying at least one functional group R1. Preferred organic polymers Pa1 are butadiene-based polymers, which have been chemically modified by grafting thereon a polymer carrying at least one functional group Ra.

Preferably, particle B comprises an inorganic material Ib.

The inorganic material Ib can be an inorganic material Ib1, which is an inorganic material carrying at least one functional group Rb.

An example of an inorganic material carrying at least one functional group Rb is chemically modified silicium dioxide carrying NH₂-groups, which can be prepared by first reacting tetraethoxysilane with aqueous ammonia in ethanol, followed by addition of 3-aminopropyltriethoxysilane as described in EP 1 726 609 A1 (page 6, fourth paragraph).

A further example of an inorganic material carrying at least one functional group Rb is the organically modified polyoxometalate (POM-SH) of formula [P₂W₁₇O₆₁(SiC₃H₆SH)₂O]⁶⁻, which can be prepared by reacting HSC₃H₆Si(OCH₃)₃ with K₁₀[P₂W₁₇O₆₁] as described in C. Cannizzo et al. Advanced Materials 2005, 17, 2888 to 2892.

When the inorganic material Ib is an inorganic material Ib1, particles B can comprise at least 70% by weight of the inorganic material Ib1 based on the weight of particle B. Preferably, particle B comprises at least 80%, more preferably at least 90% by weight of the inorganic material Ib1 based on the weight of particle B, and most preferably particle B consists of the inorganic material Ib1.

The inorganic material Ib can also be an inorganic material Ib2, which is surrounded (or encapsulated) by a shell polymer Sb, which is a polymer carrying at least one functional group Rb.

Examples of inorganic materials Ib2 are metal oxides, metal salts, metals, alkaline or earth alkaline metal oxides, alkaline or earth alkaline metal salts and polyoxometalates, and mixtures thereof

Examples of metal oxides are silicium dioxide, aluminium oxide, zinc oxide, yttrium oxide, cerum oxide, titanium dioxide, zirconium dioxide and niobium oxide, and mixtures thereof.

An example of a metal salt is lead sulfite. An example of a metal is silver. An example of an earth alkaline metal salt is barium sulfate. An example of a polyoxometelate is K₁₀[P₂W₁₇O₆₁].

Preferably, the inorganic material Ib2 is a metal oxide, more preferably, it is silicium dioxide.

Inorganic materials Ib2 are commercially available, for example an aqueous dispersion of silicium dioxide having an average diameter of 30 nm is sold under the tradename Ludox® TMA colloidal silica by Aldrich, or the inorganic materials Ib2 can be prepared by methods known in the art, for example silicium dioxide can be prepared as described by Stöber et al. J. Colloid Interface Sci. 1968, 26, 62 to 69.

The shell polymer Sb can be either organic or inorganic. Preferably, the shell polymer Sb is organic.

When the shell polymer Sb is organic it can be, for example a polymer, which is formed from at least one ethylenically unsaturated monomer carrying at least one functional group Rb, optionally ethylenically unsaturated monomers carrying at least two ethylenically unsaturated groups and optionally further ethylenically unsaturated monomers in the presence of an initiator.

Examples of ethylenically unsaturated monomers carrying at least one functional group Rb are 4-vinylbenzyl chloride, chloromethyl acrylate, 2-chloroethyl methacrylate, 2-chloroethyl acrylate, vinyl chloroacetate, 2-chloroethyl vinyl ether, vinyl chloroacetate, (4-vinylbenzyl)-trimethylammonium chloride, dimethylaminoethyl acrylate, dimethylaminoethyl methacrylate, allylamine and maleic anhydride. Preferred ethylenically unsaturated monomers carrying at least one functional group Rb are dimethylaminoethyl acrylate, dimethylaminoethyl methacrylate and allylamine.

Examples of ethylenically unsaturated monomers carrying at least two ethylenically unsaturated groups, further ethylenically unsaturated monomers and initiators are given above. These polymers can be prepared by standard polymerization procedures, for example by free radical polymerization as described in K. Matyjaszewski, T.P. Davis "Handbook of Radical Polymerisation", John Wiley and Sons, Hoboken, USA, 2002.

When the shell polymer Sb is organic it can also be a polyalkyleneimine such as polyethyleneimine or polypropyleneimine, or a chemically modified polyalkyleneimine, or a polyetheramine, for example as sold under the tradename Jeffamine®.

The shell polymer Sb is preferably, a polyalkyleneimine or a chemically modified polyalkyleneimine. A preferred polyalkyleneimine is polyethyleneimine. A preferred chemically modified polyalkyleneimine is chemically modified polyethyleneimine.

Methods of preparation for polyalkyleneimine and chemically modified polyalkyleneimine are given above.

Preferably, chemically modified polyalkyleneimine can be prepared by reacting polyalkyleneimine with a molecule carrying at least one heterocyclic three-membered ring of formula 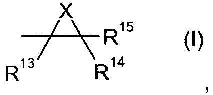 wherein X is O. Preferably, R¹³, R¹⁴ and R¹⁵ are hydrogen.

Preferably, the molar ratio of alkyleneimine units (ex polyalkyleneimine)/molecule carrying at least one heterocyclic. three-membered ring of formula (I) is from 1.1//1 to 10/1, more preferably, it is from 1.5/1 to 6/1, most preferably, it is from 1.8/1 to 3/1.

The chemically modified polyalkyleneimine can be more hydrophilic or more hydrophobic than unmodified polyalkyleneimine. Preferably, the chemically modified polyalkyleneimine is more hydrophobic than the unmodified polyalkyleneimine.

For example, a chemically modified polyalkyleneimine, which is more hydrophobic than unmodified polyalkyleneimine, can be prepared by reacting polyalkyleneimine with 1,2-dodecene-oxide. The molar ratio of alkyleneimine units (ex polyalkylene-imine)/1,2-dodecene-oxide can be from 1/1 to 5/1, preferably, it is from 1.5/1 to 2.5/1, most preferably it is 2/1. The reaction is preferably carried out in an organic solvent, more preferably, in an polar aprotic organic solvent such as dioxane, N-methylpyrrolidone, N,N-dimethylacetamide and sulfolane, most preferably in dioxane. Preferably, the reaction is carried out at a temperature of 10 to 180 °C, more preferably at a temperature of 30 to 150 °C, most preferably at a temperature of 40 to 110 °C.

The inorganic material Ib2 can be surrounded, respectively, encapsulated by the shell polymer Sb, for example, by preparing the shell polymer Sb in the presence of the inorganic material Ib2, or by mixing the inorganic material Ib2 with the shell polymer Sb.

For example, inorganic material Ib2 can be surrounded, respectively, encapsulated by a polymer formed from at least one ethylenically unsaturated monomer carrying at least one functional group Rb, optionally ethylenically unsaturated monomers carrying at least two ethylenically unsaturated groups and optionally further ethylenically unsaturated monomers by polymerizing at least one ethylenically unsaturated monomer carrying at least one functional group Rb, optionally ethylenically unsaturated monomers carrying at least two ethylenically unsaturated groups and optionally further ethylenically unsaturated monomers in the presence of the inorganic material Ib2 and in the presence of an initiator.

For example, the inorganic material Ib2 can be surrounded, respectively, encapsulated by polyalkyleneimine or chemically modified polyalkyleneimine by mixing the inorganic material Ib2 and polyalkyleneimine or chemically modified polyalkyleneimine. The reaction is preferably carried out in aqueous medium, more preferably in water. The reaction is also preferably carried out at a temperature of 5 to 60 °C, more preferably at a temperature of 10 to 40 °C, most preferably at a temperature of 20 to 30 °C. Preferably, the reaction is carried out under treatment with ultrasound.

When the inorganic material Ib is the inorganic material Ib2, which is surrounded (or encapsulated) by a shell polymer Sb, particles B can comprise at least 55%, at least 70%, at least 80% or at least 85% by weight of the inorganic material Ib2 based on the weight of particle B.

The weight ratio of inorganic material Ib2/shell polymer Sb can be from 55/45 to 99/1, from 70/30 to 99/1, from 80/20 to 98/2 or from 85/15 to 97/3.

Also part of the invention is a process for the preparation of the organic-inorganic composite particles of the present invention, which process comprises the step of i) reacting particles A with particles B and forming the organic-inorganic composite particles.

Preferably, the reaction is performed by adding particles A to particles B.

Preferably, the weight ratio of particles A/particles B is from 10/90 to 90/10, more preferably from 20/80 to 80/20, even more preferably from 30/70 to 70/30 and most preferably from 40/60 to 60/40.

Preferably, the reaction is carried out in aqueous medium, more preferably, in water.

The reaction can be carried out at a temperature of 5 to 100 °C. Preferably, it is carried out at a temperature of 10 to 90 °C, more preferably at a temperature of 30 to 80, most preferably at a temperature of 40 to 70 °C.

The reaction can be performed in an ultrasound bath.

The organic-inorganic composite particles can then be isolated using suitable methods, for example freeze drying.

Also part of the present invention is a composition comprising the organic-inorganic composite particles of the present invention, a solvent and a binder.

The solvent is preferably an aqueous medium such as a mixture of water and at least one water-miscible or water-soluble organic solvent, or water.

Examples of water-miscible or water-soluble organic solvents are C₁₋₆-alcohols such as ethanol, propanol, isopropanol, butanol and 2-methoxypropanol, mono- and polyalkylene-glycols such as ethyleneglycol, propyleneglycol, polyethyleneglycol and polypropyleneglycol, mono- and polyalkyleneglycol ethers such as ethyleneglycol dimethylether, ethyleneglycol diethylether and dipropylene glycol monomethylether, and N-methylpyrrolidone.

The water-miscible or water-soluble organic solvent usually functions as coalescent agent.

Preferably, the water-miscible or water-soluble organic solvent is a mono- or polyalkyleneglycol ether, more preferably, it is dipropylene glycol methylether.

Preferably, the solvent is a mixture of water and at least one water-miscible or water-soluble organic solvent.

Preferably the weight ratio water/(sum of all water-miscible or water-soluble organic solvents) is in the range of 0.1/1 to 50/1, more preferably in the range of 1/1 to 30/1, most preferably, in the range 5/1 to 25/1.

The binder can be any binder which is known in the art, for example those described in Ullmann's Encyclopedia of Industrial Chemistry, 5th Edition, Vol. A18, pp. 368-426, VCH, Weinheim 1991.

The binder is preferably an organic polymeric binder and can be selected from the group consisting of acrylic polymers, styrene polymers, hydrogenated products of styrene polymers, vinyl polymers, vinyl polymer derivatives, polyolefins, hydrogenated polyolefins, epoxidized polyolefins, aldehyde polymers, aldehyde polymer derivatives, ketone polymers, epoxide polymers, polyamides, polyesters, polyurethanes, polyisocyanates, sulfone-based polymers, silicium-based polymers, natural polymers and natural polymer derivatives.

Acrylic polymers can be polymers formed from a monomer mixture comprising at least one acrylic monomer and optionally other ethylenically unsaturated monomer such as a styrene monomer, vinyl monomer, olefin monomer or α, β-unsaturated carboxylic acid monomer by polymerization of the respective monomers.

Examples of acrylic monomers are (meth)acrylic acid, (meth)acrylamide, (meth)acrylonitrile, ethyl (meth)acrylate, butyl (meth)acrylate, hexyl (meth)acrylate, 2-ethylhexyl (meth)acrylate, glycidyl methacrylate, acetoacetoxyethyl methacrylate, dimethylaminoethyl acrylate and diethylaminoethyl acrylate. Examples of styrene monomers are styrene, 4-methylstyrene and 4-vinylbiphenyl. Examples of vinyl monomers are vinyl alcohol, vinyl chloride, vinylidene chloride, vinyl isobutyl ether and vinyl acetate. Examples of olefin monomers are ethylene, propylene, butadiene and isoprene and chlorinated or fluorinated derivatives thereof such as tetrafluroethylene. Examples of α, β-unsaturated carboxylic acid monomers are maleic acid, itaconic acid, crotonic acid, maleic anhydride and maleimide.

Examples of acrylic polymers are poly(methyl methacrylate) and poly(butyl methacrylate), polyacrylic acid, styrene/acrylic acid ester copolymer, styrene/2-ethylhexyl acrylate copolymer, styrene/acrylic acid copolymer.

Styrene polymers can be polymers formed from a monomer mixture comprising at least one styrene monomer and optionally at least one vinyl monomer, olefin monomer and/or α, β-unsaturated carboxylic acid monomer by polymerization of the respective monomers. Examples of styrene polymers are polystyrene (PS), styrene butadiene styrene block polymers, styrene ethylene butadiene block polymers, styrene ethylene propylene styrene block polymers and styrene-maleic anhydride copolymers. So-called "hydrocarbon resins" are usually also styrene polymers.

Vinyl polymers can be polymers formed from a monomer mixture comprising at least one vinyl monomer and optionally at least one olefin monomer and/or α, β-unsaturated carboxylic acid monomer by polymerization of the respective monomers. Examples of vinyl polymers are polyvinyl chloride (PVC), polyvinyl pyrrolidone, polyvinylidenfluoride, polyvinylalcohol, polyvinylacetate, partially hydrolysed polyvinyl acetate and methyl vinyl ether-maleic anhydride copolymers. Examples of vinyl polymer derivatives are carboxy-modified polyvinyl alcohol, acetoacetyl-modified polyvinyl alcohol, diacetone-modified polyvinyl alcohol and silicon-modified polyvinyl alcohol.

Polyolefins can be polymers formed from a monomer mixture xomprising at least one olefin monomer and optionally at least one α, β-unsaturated carboxylic acid monomer by polymerization of the respective monomers. Examples of polyolefines are low-density polyethylene (LDPE), high-density polyethylene (HDPE), polypropylene (PP), biaxially orientated polypropylene (BOPP), polybutadiene, perfluoroethylene (Teflon) and isopropylene-maleic anhydride copolymer

Aldehyde polymers can be polymers formed from at least one aldehyde monomer or polymer and at least one alcohol monomer or polymer, amine monomer or polymer and/or urea monomer or polymer. Examples of aldehyde monomers are formaldehyde, furfural and butyral. Examples of alcohol monomers are phenol, cresol, resorcinol and xylenol. An example of a polyalcohol is polyvinyl alcohol. Examples of amine monomers are aniline and melamine. Examples of urea monomers are urea, thiurea and dicyandiamide. Examples of aldehyde polymers are polyvinyl butyral formed from butyral and polyvinyl alcohol, melamine-formaldehyde polymer and urea-formaldehyde polymer. Aldehyde polymers formed from phenol and an aldehyde are called "phenol resins". Examples of aldehyde polymer derivatives are alkylated aldehyde polymers.

An example of a ketone polymer is ketone resin, a condensation product of methyl cyclohexanone and/or cyclohexanone.

Epoxide polymers can be polymers formed from at least one epoxide monomer and at least one alcohol monomer and/or amine monomer. Examples of epoxide monomers are epichlorohydrine and glycidol. Examples of alcohol monomers are phenol, cresol, resorcinol, xylenol, bisphenol A and glycol. An example of epoxide polymer is phenoxy resin, which is formed from epichlorihydrin and bisphenol A.

Polyamides can be polymers formed from at least one monomer having an amide group or an amino as well as a carboxy group or from at least one monomer having two amino groups and at least one monomer having two carboxy groups. An example of a monomer having an amide group is caprolactam. An example of a diamine is 1,6-diaminohexane. Examples of dicarboxylic acids are adipic acid, terephthalic acid, isophthalic acid and 1,4-naphthalene-dicarboxylic acid. Examples of polyamides are polyhexamethylene adipamide and polycaprolactam.

Polyesters can be formed from at least one monomer having a hydroxy as well as a carboxy group, anhydride group or lactone group or from at least one monomer having two hydroxy groups and at least one monomer having two carboxy groups, anhydride groups or a lactone group. An example of a monomer having a hydroxy as well as a carboxy group is adipic acid. An example of a diol is ethylene glycol. An example of a monomer having a lactone group is carprolactone. Examples of dicarboxylic acids are terephthalic acid, isophthalic acid and 1,4-naphthalenedicarboxylic acid. An example of a polyester is polyethylene terephthalate (PET). Polyesters formed from an alcohol and an acid or acid anhydride are called "alkyd resins".

Polyurethane can be polymers formed from at least one diisocyanate monomer and at least one polyol monomer and/or polyamine monomer. Examples of diisocyanate monomers are hexamethylene diisocyanate, toluene diisiocyanate, isophorone diisocyanate and diphenylmethane diisocyanate.

Examples of sulfone-based polymers are polyarylsulfone, polyethersulfone, polyphenylsulfone and polysulfone. An example of a polysulfone is a polymer formed from 4,4-dichlorodiphenyl sulfone and bisphenol A.

Examples of silicum-based polymers are polysilicates, silicone resins and polysiloxanes.

Examples of natural polymers are starch, cellulose, gelatine, casein, rosin, terpene resin, shellac, copal Manila, asphalts, gum Arabic and natural rubber. Examples of natural polymer derivatives are dextrin, oxidised starch, starch-vinyl acetate graft copolymers, hydroxyethyl cellulose, hydroxypropyl cellulose, nirocellulose, methyl cellulose, ethyl cellulose, carboxymethyl cellulose, acetyl cellulose, acetyl propionyl cellulose, acetyl butyryl cellulose, propionyl cellulose, butyryl celluloseand chlorinated rubber.

Preferably the binder is an acrylic polymer, for example an acrylic polymer formed from a monomer mixture comprising at least one acrylic monomer and at least one styrene monomer such as a styrene/acrylic acid ester, as sold for example as aqueous dispersion under the tradename Alberdingk® AS 6002.

The composition of the present invention preferably comprises a pigment. Examples of pigments are inorganic pigments such as titanium dioxide, and organic pigments such as phthalocyanine-type pigments or diketopyrrolo pyrrol-type pigments. Diketopyrrolo pyrrol-type pigments are sold under the tradename Ciba® Irgazin® DPP, for example 3,6-di(4-chlorophenyl)-1,4-diketopyrrolo[3,4-c]-pyrrol is sold under the tradename Ciba® Irgazin® DPP Red BO. Preferably, the pigment is inorganic, more preferably it is titanium dioxide.

The composition of the present invention preferably comprises a filler. The filler can be calcium carbonate. Further examples of fillers are barium sulfate, silicium dioxide, kaolin, calcined kaolin, mica, aluminum oxide, aluminum hydroxide, aluminum silicates, talc, amorphous silica and colloidal silicon dioxide.

The composition can comprise additional components such as dispersing agents, defoamers, biocides, fungicides, algicides, insecticides, rheological additives such as thickeners or thixotropic agents, neutralizing agents, accelerators, levelling agents and wetting agents, waxes and hydrophobing agents, UV absorbers and antioxidants.

Examples of dispersing agents are ammonium acrylate copolymers (aqueous dispersion of an ammonium acrylate copolymer is sold under the tradename Ciba® Dispex® GA40).

Examples of defoamers are polyether siloxane copolymers (sold for example under the tradename Tego® foamex 1488) and polyether siloxane copolymers (sold for example under the tradename Ciba® EFKA® 2550).

An example of a biocide is octylisothiazolinone. Examples of fungicides are 3-iodine-2-propynyl butyl carbonate (sold for example under the tradename Preventol® MP 100) and methyl-*N*-(1H-benzimidazol-2-yl)carbamate (sold for example under the tradename Preventol® BCM). An example of an algicide is N'-isobutyl-N-cyclopropyl-6-(methylthio)-1,3,5-triazine-2,4-diamine (sold for example under the tradename Ciba® Irgaguard® D 1071).

Examples of thickeners arehydroxyethylcellulose surface-treated with glyoxal (sold, for example, under the tradename Natrosol® 250 HR), and urethane based polymers (sold, for example, under the tradename Ciba® Rheovis® PU 10).

An example of a neutralizing agent is 2-amino-2-methylpropan-1-ol (AMP).

The composition of the present invention can comprise from 0.1 to 70% by weight of the organic-inorganic composite particles of the present invention based on the weight of the composition. The composition comprises preferably from 0.2 to 40%, more preferably from 0.5 to 20%, most preferably from 1.0 to 10% by weight of the organic-inorganic composite particles of the present invention based on the weight of the composition.

The composition of the present invention can comprise from 10 to 99% by weight of the solvent based on the weight of the composition. The composition comprises preferably from 20 to 80%, more preferably from 30 to 70%, most preferably from 40 to 60% by weight of the solvent based on the weight of the composition.

The composition of the present invention can comprise from 1 to 80% by weight of the (dry) binder based on the weight of the composition. The composition comprises preferably from 1 to 50%, more preferably from 5 to 30%, most preferably from 10 to 20% by weight of the binder based on the weight of the composition.

The composition of the present invention can comprise from 0 to 80%, from 1 to 60%, from 5 to 40% or from 10 to 30% by weight of the pigment based on the weight of the composition.

The composition of the present invention can comprise from 0 to 80%, from 1 to 60%, from 1 to 40% or from 1 to 20% by weight of the filler based on the weight of the composition.

The composition of the present invention can comprise from 0 to 20%, from 0.1 to 10% or from 1 to 5% by weight of the additional components based on the weight of the composition.

Also part of the present invention is a process for the preparation of the composition comprising the organic-inorganic composite particles of the present invention, a solvent and a binder, which process comprises the step of
i) mixing the solvent, the organic-inorganic composite particles and the binder.

If a pigment, a filler or additional components are present these components are also included in step i).

Also part of the present invention is a substrate coated with the composition of the present invention comprising the organic-inorganic compomsite particles of the present invention, a solvent and a binder.

Examples of substrates are paper, cardboard, wood, leather, metals, textiles, polymers, glass, ceramics, stones, minerals and architectural construction materials, and mixtures thereof.

Examples of metals are iron, nickel, palladium platin, copper, silver, gold, zinc and aluminium and alloys such as steel, brass, bronze and duralumin.

Textiles can be made from natural fibres such as fibres from animal or plant origin, or from synthetic fibres. Examples of natural fibres from animal origin are wool and silk. Examples of natural fibres from plant origin are cotton, flax and jute. Examples of synthetic textiles are polyester, polyacrylamide, polyolefins such as polyethylene and polypropylene and polyamides such as nylon and lycra.

Examples of polymers are acrylic polymers, styrene polymers and hydrogenated products thereof, vinyl polymers and derivatives thereof, polyolefins and hydrogenated or epoxidized products thereof, aldehyde polymers, epoxide polymers, polyamides, polyesters, polyurethanes, polycarbonates, sulfone-based polymers and natural polymers and derivatives thereof. Definitions of these polymers are given above.

Examples of glass are soda lime glass and borosilicate glass.

Examples of ceramics are products made primarily from clay, for example bricks, tiles and porcelain, as well as technical ceramics such as aluminium oxide and zirconium dioxide.

Examples of stones are limestone, gravel, granite, gneiss, marble, slate and sandstone.

Examples of minerals are gypsum (hydrated calcium sulfate), calcite (calcium carbonate), aragonite (calcium carbonate) and native lime (calcium oxide).

Architectural construction materials are materials made from stones and/or minerals, and optionally further ingredients such as sand, clay and fly ash. Examples of architectural construction materials are cement such as Portland cement, burnt lime (calcium oxide), slaked lime (calcium hydroxide), concrete, plaster, mortar and lime sand brick.

Preferably, the substrate is a metal, a ceramic, a stone, a mineral or an architectural construction material, or a mixture thereof. More preferably, the substrate is a brick (made primarily from clay), a tile, a stone, a mineral or an architectural construction material. Most preferably, the substrate is a brick (made primarily from clay), a stone, glypsum, cement, burnt lime (calcium oxide), slaked lime (calcium hydroxide), concrete, plaster, mortar or a lime sand brick.

Also part of the invention is a process for forming the coated substrate, which process comprises the step of
i) applying the composition of the present invention comprising the organic-inorganic composite particles of the present invention, a solvent and a binder to a substrate, and
ii) forming a coating-layer.

The composition of the present invention can be applied to the substrate using standard coating application as such as brush application, roll application, slit coating application, bar coater application, rotation application, spray application, curtain application, dip application, air application, knife application or blade application. Preferred applications are brush applications and roll applications.

The thickness of the coating-layer is usually chosen in the range of 0.1 to 6'000 µm. Preferably, it is in the range of 1 to 1'000 µm. More preferably, it is in the range of 10 to 200 µm.

Preferably, the coating-layer is formed by drying the composition applied to the substrate.

Also part of the present invention is the use of the organic-inorganic composite particles in architectural coating compositions.

Also part of the present invention is the use of the composition of the present invention as architectural coating composition.

Also part of the invention are particles A comprising an organic polymer Pa, which is a butadiene-based polymer, which has been chemically modified by grafting thereon a polymer carrying at least one functional group Ra.

The preparation of butadiene-based polymers, which have been chemically modified by grafting thereon a polymer carrying at least one functional group Ra, is given above.

The organic-inorganic composite particles of the present invention have the advantage that the organic-inorganic composite particles, when applied into a coating, impart improved dirt resistance to that coating. At the same time the organic-inorganic composite particles of the present invention can be prepared by convenient and easy chemistry from cheap and commercially available starting materials.
Figure 1 shows a transmission electron microscopy (TEM) of the organic-inorganic composite particles of example 3.
Figure 2 shows a scanning electron microscopy (SEM) of the organic-inorganic composite particles of example 3.
Figure 3 show as a DLS measurement (volume distributation) of the organic-inorganic composite particles of example 3 in different concentrations in water. Y-axis: count volume weighted, X-axis: size = diameter of the particles [nm].
Figure 4 shows a transmission electron microscopy (TEM) of the organic-inorganic composite particles of example 5.
Figure 5 shows a transmission electron microscopy (TEM) of the organic-inorganic composite particles of example 8.
Figure 6 shows a scanning electron microscopy (SEM) of the organic-inorganic composite particles of example 8.
Figure 7 shows a transmission electron microscopy (TEM) of the organic-inorganic composite particles of example 11 in water.
Figure 8 shows a transmission electron microscopy (TEM) of the organic-inorganic composite particles of example 11 in N,N-dimethylacetamide.
Figure 9 shows a transmission electron microscopy (TEM) of the organic-inorganic composite particles of example 13 in water.

### Examples

### Example 1

### Preparation of particles A consisting of an organic polymer carrying at least one -Cl group

160 g of Ciba® Latexia® 302 (an aqueous dispersion of styrene/butadiene copolymer particles having a solid content of 50% (w/w), an average particle diameter (d) of 160 nm and a glass transition temperature (Tg) of 10°C) and 500 mL water are introduced into a 1 L round bottom flask equipped with a mechanical stirrer. This aqueous dispersion is purged with nitrogen for 1 h and heated to 60 °C. A first portion of an initiator mixture consisting of 3 mL of a 2.5% (w/w) aqueous solution of potassium persulfate (Fluka microselect) and 2 mL of a 1.25% (w/w) aqueous solution of sodium hydrogensulfite (Riedel de Haen) is introduced. Then, a monomer mixture consisting of 16.56 g (159 mmol) styrene (Fluka purum), 3.42 g (26.2 mmol) divinylbenzene (Fluka techn., mixture of isomers) and 14.28 g (93.6 mmol) 4-vinylbenzylchloride (Fluka techn.) is added slowly via a syringe through a septum during 5 h while the temperature of the reaction mixture is maintained at 60 °C and the stirrer speed at 300 rpm. 2 h after start of the monomer addition, a second portion of the initiator mixture consisting of 3 mL of a 2.5% (w/w) aqueous solution of potassium persulfate and 2 mL of a 1.25% (w/w) aqueous solution of sodium hydrogensulfite is added. After cooling to room temperature the reaction mixture is filtered, and 772.6 g of an aqueous dispersion of particles A is obtained. The dispersion having a pH of 1.97 and a solid content of 13.3% (w/w) (as determined by coagulation of 15 g of this dispersion in 100 mL 10% (w/w) aqueous solution of MgSO₄ with 2 mL acetic acid at 55 °C) is obtained. Based on the solid content, the yield of particles A is determined to be 90.4%. Elemental analysis: calc. % (found %): Cl 2.91 (2.30). Particles A have an average particle diameter (d) of 160 to 165 nm (as determined by transmission electron microscopy (TEM)) and a glass transition temperature (Tg) of 11.3 °C (as determined by differential scanning calorimetry (DSC) at 10 °C/min).

### Example 2

### Preparation of particles B comprising an inorganic material Ib2 surrounded by a polymer carrying at least one -NH- group

In a 2 L round bottom flask equipped with a mechanical stirrer, 2.082 g polyethyleneimine sold by Aldrich (branched, number average molecular weight (Mₙ) = 10'000, polydispersity index (PDI) = 2.5) is dissolved in 150 mL water and 106.56 g of Ludox® TMA colloidal silica sold by Aldrich (a 34% (w/w) aqueous dispersion of silicium dioxide particles having a particle diameter (d) of 30 nm) are added dropwise over 45 minutes at room temperature. The mixture is treated with an ultrasound bath for 1 h, and a 14.8% (w/w) aqueous dispersion of particles B is obtained. Particles B are calculated to consist of 94.6% (w/w) of silicium dioxide and 5.4% (w/w) of polyethyleneimine.

### Example 3

### Preparation of organic-inorganic composite particles from particles A of example 1 and Particles B of example 2

270.6 g of the ca. 13.3% (w/w) aqueous dispersion of particles A obtained as described in example 1 is added dropwise over 1 h to well-stirred 259 g of the 14.8% (w/w) aqueous dispersion of the particles B obtained as described in example 2, followed by heating the reaction mixture to 55 °C for 5 h, cooling down to room temperature and treating the reaction mixture for 1 h in an ultrasound bath. The obtained dispersion of organic-inorganic composite particles has a pH of 7.5. The dispersion is then freeze-dried and 70 g solid powder is obtained. The organic-inorganic composite particles have an organic matter content of 45.1 % (w/w) (as determined by thermographimetric analysis (TGA), 30-800°C, 10°C/minute), a silicium dioxide content of 54.9% (w/w) (as obtained by calculation: organic matter content + silicium dioxide content = 100%), an average diameter (d) of about 200 nm and a raspberry-like structure (as determined by transmission and scanning electron microscopy (TEM, SEM), see Figures 1 and 2), an average diameter of 295 nm and a Zeta potential of + 35 mV (as determined by a Zeta Sizer coupled to dynamic light scattering (DLS)), see Figure 3) and a glass transition temperature (Tg) of 6 °C (as determined by differential scanning calorimetry (DSC) at 10 °C/min). An homogeneous aqueous dispersion can be obtained by adding 30 g of the freeze-dried powder to 120 mL water containing 0.2 g of the commercial defoamer "Tego Foamex 1488" and stirring it for 2 h in an ultrasound bath. Dynamic light scattering of this dispersion diluted to 0.0018%, respectively, 0.000018% (w/w) of the organic-inorganic composite particles also shows that the particles do not agglomerate (see also Figure 3).

### Example 4

### Preparation of particles B comprising an inorganic material lb2 surrounded by a polymer carrying at least one -NH- group

In a 800 mL round bottom flask equipped with a mechanical stirrer, 0.347 g polyethylene imine sold by Aldrich (branched, number average molecular weight (Mₙ) = 10'000, polydispersity index (PDI) = 2.5) is dissolved in 75 mL water and 17.76 g of Ludox® TMA colloidal silica sold by Aldrich (a 34% (w/w) aqueous dispersion of silicium dioxide particles having a particle diameter (d) of 30 nm) are added dropwise over 30 minutes at room temperature. The mixture is treated with an ultrasound bath for 1 h, and a 6.9 % (w/w) aqueous dispersion of particles B is obtained. Particles B are calculated to consist of 94.6% (w/w) of silicium dioxide and 5.4% (w/w) of polyethylene imine.

### Example 5

### Preparation of organic-inorganic composite particles from particles A of example 1 and particles B of example 4

84.2 g of the ca. 13.3 % (w/w) aqueous dispersion of particles A obtained as described in example 1 is added dropwise over 1 h to well-stirred 93 g of the 6.9 % (w/w) aqueous dispersion of particles B obtained as described in example 4, followed by heating the reaction mixture to 50 °C for 5 h, cooling down to room temperature and treating the reaction mixture for 1 h in an ultrasound bath. 223.5 g of a white dispersion containing organic-inorganic composite particles, and having a pH of 6.3 is obtained. 10 g of the dispersion is then freeze-dried to yield 0.712 g of a solid powder. The organic-inorganic composite particles have an organic matter content of 60.8% (w/w) (as determined by thermographimetric analysis (TGA), 30-800°C, 10°C/minute), a silicium dioxide matter content of 39.2% (w/w) (as obtained by calculation: organic matter content + silicium dioxide content = 100%), an average diameter (d) of about 200 nm and a raspberry-like structure (as determined by transmission and scanning electron microscopy (TEM, SEM), see Figure 4). No free silicium dioxide particles can be detected by TEM.

### Example 6

### Preparation of particles A consisting of an organic polymer carrying at least one -Cl group

160 g of Ciba® Latexia® 302 (an aqueous dispersion of styrene butadiene copolymer particles having a solid content of 50% (w/w), an average particle diameter (d) of 160 nm and a glass transition temperature (Tg) of 10°C) and 250 mL water are introduced into a 1 L round bottom flask equipped with a mechanical stirrer. This aqueous dispersion is purged with nitrogen for 1 h and heated to 60 °C. A first portion of an initiator mixture consisting of 1.5 mL of a 3.0% (w/w) aqueous solution of potassium persulfate (Fluka microselect) and 2.75 mL of a 1.0% (w/w) aqueous solution of sodium hydrogensulfite (Riedel de Haen) is introduced. Then, a monomer mixture consisting of 9.93 g (77.5 mmol) butyl acrylate (Fluka purum), 1.71 g (13.1 mmol) divinylbenzene (Fluka techn., mixture of isomers) and 5.49 g (37 mmol) 2-chloroethyl methacrylate (ABCR) is added slowly via a syringe through a septum during 5 h while the temperature of the reaction mixture is maintained at 65 °C and the stirrer speed at 300 rpm. 2 h after start of the monomer addition, a second portion of the initiator mixture consisting of 1.4 mL of a 3.0% (w/w) aqueous solution of potassium persulfate and 2.75 mL of a 1.0% (w/w) aqueous solution of sodium hydrogensulfite is added. After cooling to room temperature the reaction mixture is filtered, and 389.3 g of an aqueous dispersion of the particles A is obtained. The dispersion has a solid content of 12.75% (w/w) (as determined by coagulation of 20 g of this dispersion in 100 mL 10% (w/w) aqueous solution of MgSO₄ with 2 mL acetic acid at 60 °C) is obtained. Based on the solid content, the yield of the particles A is determined to be 87.0%. Elemental analysis: calc. % (found %): CI 2.30 (2.44). The particles A have an average particle diameter (d) of 162 nm (as determined by transmission electron microscopy (TEM)) and a glass transition temperature (Tg) of 15 °C (as determined by differential scanning calorimetry (DSC) at 10 °C/min).

### Example 7

### Preparation of particles B comprising an inorganic material Ib2 surrounded by a polymer carrying at least one -NH- group

In a 1 L round bottom flask equipped with a mechanical stirrer, 0.45 g polyethylene imine sold by Aldrich (branched, number average molecular weight (Mₙ) = 10'000, polydispersity index (PDI) = 2.5) is dissolved in 50 mL water and 23.53 g of Ludox® TMA colloidal silica sold by Aldrich (a 34% (w/w) aqueous dispersion of silicium dioxide particles having a particle diameter (d) of 30 nm) are added dropwise over 30 minutes at room temperature. The mixture is treated with an ultrasound bath for 1 h, and a 11.4 % (w/w) aqueous dispersion of particles B is obtained. Particles B are calculated to consist of 94.7% (w/w) of silicium dioxide, which functions as the core, and 5.3% (w/w) of polyethylene imine, which functions as the shell.

### Example 8

### Preparation of organic-inorganic composite particles from particles A of example 6 and particles B of example 7

62.74 g of the ca. 12.75 % (w/w) aqueous dispersion of particles A obtained as described in example 6 is added dropwise over 1 h to well-stirred 74 g of the 11.4 % (w/w) aqueous dispersion of particles B obtained as described in example 7, followed by heating the reaction mixture to 65 °C for 5 h, and stirring the reaction mixture in an ultrasound bath at this temperature for 6 h. After cooling to room temperature 235.8 g of a white dispersion containing organic-inorganic composite particles and having a pH of 8.4 is obtained. 20 g of the dispersion is then freeze-dried to yield 1.41 g of a solid powder, which is redispersible in water. The organic-inorganic composite particles have an organic matter content of 48.5% (w/w) (as determined by thermographimetric analysis (TGA), 30-800°C, 10°C/minute), a silicium dioxide content of 51.5% (w/w) (as obtained by calculation: organic matter content + silicium dioxide content = 100%), an average diameter (d) of about 200 nm and a raspberry-like structure (as determined by transmission and scanning electron microscopy (TEM, SEM), see Figures 5 and 6). No free silicium dioxide particles can be detected by TEM.

### Example 9

### Preparation of polyethylene imine carrying hydrophobic side chains

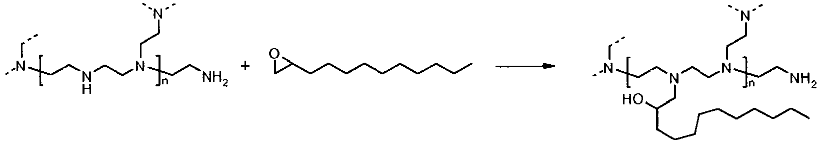

In a 250 mL round bottom flask 4.3 g (100 mmol ethylene imine units) polyethylene imine (Aldrich, branched, number average molecular weight (Mₙ) = 10'000, polydispersity index (PDI) = 2.5) is dissolved in 45 mL dioxane (Riedel de Haen) and 9.21 g (50 mmol) 1,2-dodecene-oxide (Aldrich) is added. The reaction mixture is then stirred for 1 h at 50 °C followed by 3 h at 100 °C. The dioxane and excess/non reacted 1,2-dodecene-oxide are evaporated under reduced pressure and the product is dried at 80 °C *in vacuo* (<0.1 mbar). 5.9 g of a yellowish oil is obtained. Therefore, 1.6 g (8.7 mmol) of 1,2-dodecene-oxide has reacted. Elemental analysis: calc. % (found %): C 61.67 (61.25), H 11.82 (11.86), N 24.30 (22.29).

### Example 10

### Preparation of particles B comprising an inorganic material Ib2 surrounded by a polymer carrying at least one -NH- group

In a 500 mL round bottom flask with mechanical stirring, 0.476 g of polyethylene imine carrying hydrophobic side chains obtained as described in example 9 is dissolved in 75 mL water and 17.76 g of Ludox® TMA colloidal silica sold by Aldrich (a 34% (w/w) aqueous dispersion of silicium dioxide particles having a particle diameter (d) of 30 nm) is added dropwise with additional 25 mL water during 30 minutes at room temperature. The mixture is treated with an ultrasound bath for 1 h, and a 5.5% (w/w) aqueous dispersion of particles B is obtained. Particles B are calculated to consist of 92.7% (w/w) of silicium dioxide, which functions as the core, and 7.3% (w/w) of polyethyleneimine carrying hydrophobic side chains, which functions as the shell.

### Example 11

### Preparation of organic-inorganic composite particles from particles A of example 1 and particles B of example 10

45.1 g of the ca. 13.3 % (w/w) aqueous dispersion of particles A obtained as described in example 1 is added dropwise over 20 minutes to well-stirred 118 g of the 5.5% (w/w) aqueous dispersion of particles B obtained as described in example 10, followed by treating the reaction mixture in an ultrasound at 50 °C for 3 h. After cooling to room temperature, the reaction mixture is transferred to another vessel (rinsing with water) and stirred in an ultrasound bath overnight. 166.6 g of a white dispersion containing organic-inorganic composite particles is obtained. 10 g of the dispersion is then freeze-dried to yield 0.741 g of a solid powder. The organic-inorganic composite particles have an organic matter content of 48.3% (w/w) (as determined by thermographimetric analysis (TGA), 30-800°C, 10°C/minute), a silicium dioxide content of 51.7% (w/w) (as obtained by calculation: organic matter content + silicium dioxide content = 100%), an average diameter (d) of about 180 to 240 nm and a raspberry-like structure (as determined by transmission electron microscopy (TEM) in water and N,N-dimethylacetamide, see Figures 7 and 8). The organic-inorganic composite particles are more agglomerated in N,N-dimethylacetamide than in water. The dispersion of the organic-inorganic composite particles in N,N-dimethylacetamide is obtained by adding 150 mL N,N-dimethylacetamide to 10 g of the aqueous dispersion of organic-inorganic composite particles, and removing water and part of N,N-dimethylacetamide by distillation.

### Example 12

### Preparation of particles B comprising an inorganic material Ib2 surrounded by a polymer carrying at least one -NH- group

In a 500 mL round bottom flask with mechanical stirring, 0.952 g of polyethylene imine carrying hydrophobic side chains obtained as described in example 9 is dissolved in 75 mL water and 17.76 g of Ludox® TMA colloidal silica sold by Aldrich (a 34% (w/w) aqueous dispersion of silicium dioxide particles having a particle diameter (d) of 30 nm) is added dropwise with additional 25 mL water during 30 minutes at room temperature. The mixture is treated with an ultrasound bath for 1 h, and a 5.9% (w/w) aqueous dispersion of particles B is obtained. Particles B are calculated to consist of 86.4% (w/w) of silicium dioxide, which functions as the core, and 13.6% (w/w) of polyethyleneimine carrying hydrophobic side chains, which functions as the shell.

### Example 13

### Preparation of organic-inorganic composite particles from particles A of example 1 and particles B of example 12

45.1 g of the ca. 13.3 % (w/w) aqueous dispersion of particles A obtained as described in example 1 is added dropwise over 20 minutes to well-stirred 119 g of the 5.9% (w/w) aqueous dispersion of particles B obtained as described in example 12, followed by treating the reaction mixture in an ultrasound at 50 °C for 3 h. After cooling to room temperature, the reaction mixture is transferred to another vessel (rinsing with water) and stirred in an ultrasound bath overnight. 160.92 g of a white dispersion containing organic-inorganic composite particles having a pH of 8.1 is obtained. 10 g of the dispersion is then freeze-dried to yield 0.564 g of a solid powder. The organic-inorganic composite particles have an organic matter content of 50.1 % (w/w) (as determined by thermographimetric analysis (TGA), 30-800°C, 10°C/minute), a silicium dioxide content of 49.9% (w/w) (as obtained by calculation: organic matter content + silicium dioxide content = 100%), an average diameter (d) of about 200 nm and a raspberry-like structure (as determined by transmission electron microscopy (TEM) in water (see Figure 9).

### Example 14

### Dirt-pick up behaviour of a substrate coated with coating compositions comprising the organic-inorganic composite particles of example 3

Three coating compositions, comprising 1.9% (composition A), 3.7% (composition B), respectively, 9.0% (composition C) of organic-inorganic composite particles of example 3 by weight based on the total coating composition by weight, are prepared by mixing the components listed in table 1 in the order shown in table 1, stirring the mixture for 10 minutes at 2000 rpm, adding 80 g glass beads (d = 4 mm), homogenizing the mixture, dispersing the mixture in a Scandex mixer under cooling for 1 h and removing the glass beads by filtration.

A comparative coating composition (comp. composition 1) not containing the organic-inorganic composite particles of example 3 is prepared in analogous manner.

**Table 1. ^{a}the 20% (w/w) aqueous dispersion of the particles of example 3 is prepared by redispersing the organic-inorganic composite particles of example 3 in water in the presence of glass beads (d = 4 mm) using a Scandex mixer for 4 h, and removing the glass beads by filtration.**

| | Composition | | | |
|---|---|---|---|---|
| | Comp. 1 | A | B | C |
| **Components** | **[g]** | **[g]** | **[g]** | **[g]** |
| Water | 9.60 | 7.42 | 5.22 | 0.00 |
| 20% (w/w) aqueous dispersion of the organic-inorganic composite particles of example 3^{a} | 0.00 | 3.70 | 7.40 | 18.60 |
| Ciba® Dispex® GA40 (40% (w/w) aqueous dispersion of ammonium acrylic copolymer, dispersing agent, Ciba) | 0.20 | 0.20 | 0.20 | 0.20 |
| Tego® foamex 1488 (emulsion of a polyether siloxane copolymer, defoamer, Evonik) | 0.12 | 0.12 | 0.12 | 0.12 |
| Ciba® EFKA® 2550 (modified polydimethyl siloxane, defoamer, Ciba) | 0.08 | 0.08 | 0.08 | 0.08 |
| Kronos® 2300 (titanium dioxide, pigment, Kronos) | 8.80 | 8.80 | 8.80 | 8.80 |
| Alberdingk® AS 6002 (50% (w/w) aqueous dispersion of acrylic acid ester/styrene copolymer, binder, Alberdingk Boley) | 15.20 | 14.48 | 13.78 | 11.62 |
| Omyacarb 5GU (calcium carbonate, filler, Omya) | 4.80 | 4.00 | 3.20 | 0.80 |
| Dowanol DPM® (dipropylene glycol methylether, solvent, Dow Chemical) | 0.80 | 0.80 | 0.80 | 0.80 |
| Octylisothiazolinone (biocide, Beckmann) | 0.20 | 0.20 | 0.20 | 0.20 |
| Natrosol® 250 HR (hydroxyethylcellulose surface-treated with glyoxal, thickener, Hercules) | 0.20 | 0.20 | 0.20 | 0.20 |
| **Total components** | 40.00 | 40.00 | 40.00 | 41.42 |

Table 2 shows the amounts by weight of the major solid components of the coating compositions of table 1 based on the weight of the total composition.

For comparison reasons the sum of all major solid components, which is the sum of i) organic-inorganic composite particles of example 3, ii) titanium dioxide, iii) acrylic acid ester/styrene copolymer (ex Alberdingk® AS 6002) and iv) calcium carbonate, is kept between 19.1 g and 21.2 g. An increase in the amount of organic-inorganic composite particles of example 3 is compensated by a decrease in the amounts of calcium carbonate and acrylic acid ester/styrene copolymer.

**Table 2. ^{a}"Sum" refers to the sum of i) organic-inorganic composite particles of example 3, ii) titanium dioxide, iii) acrylic acid ester/styrene copolymer (ex Alberdingk® AS 6002) and iv) calcium carbonate.**

| composition | particles of example 3/ sum^{a} [w/w] | titanium dioxide/ sum^{a} [w/w] | acrylic acid ester/styrene copolymer (ex Alberdingk® AS 6002)/ sum^{a} [w/w] | calcium carbonate/ sum^{a} [w/w] | Sum^{a} [g] |
|---|---|---|---|---|---|
| Comp. 1 | 0 | 41.5% | 35.8% | 22.6% | 21.2 |
| A | 3.6% | 42.3% | 34.8% | 19.2% | 20.9 |
| B | 7.3% | 43.1% | 33.8% | 15.7% | 20.4 |
| C | 19.5% | 46.0% | 30.4% | 4.2% | 19.1 |

These water-based, white-pigmented and acrylic acid ester/styrene-based coating compositions comprising the organic-inorganic composite particles of the present invention are suitable for use as architectural coating compositions.

The coating compositions are applied on a coil coated aluminum panel with a 200 µm slit coater and dried for 3 days at room temperature to form coating layers. The dry coating layers almost exclusively (> 95%) comprise the major solid components of the coating composition, namely i) organic-inorganic composite particles of example 3, ii) titanium dioxide, iii) acrylic acid ester/styrene copolymer (ex Alberdingk® AS 6002) and iv) calcium carbonate. The amount of the organic-inorganic composite particles of example 3 by weight based on the amount of the sum of the major solid components of the coating compositions by weight (which is almost identical to the weight of the coating layer) is 3.6%, 7.3%, respectively, 19.5%.

Artificial dirt pick-up tests are performed with black iron-oxide (33% (w/w) FeOx) and graphite (27% (w/w) graphite) slurries. Before application of the slurries color measurement of each panel is conducted. For dirt pick-up assessment the slurry are applied on the different coating samples and dried for 3 hours at room temperature. Then the panels are cleaned with tap water and a sponge. After drying color measurements of the more or less gray coating samples are performed again. Color measurements are done with spectrophotometer and calculation of L*, a*, b*, C*, h and DL* with CGREC software according DIN 6174. Results are displayed in table 3. DL* values are given without algebraic sign.

**Table 3. ^{a}"Sum" refers to the sum of i) organic-inorganic composite particles of example 3, ii) titanium dioxide, iii) acrylic acid ester/styrene copolymer (ex Alberdingk® AS 6002) and iv) calcium carbonate.**

| Composition | particles of example 3/ Sum^{a} [w/w] | DL* (FeOx) | DL* (graphite) |
|---|---|---|---|
| Comp. 1 | 0 | 23 | 43 |
| A | 3.6% | 13 | 42 |
| B | 7.3% | 8 | 41 |
| C | 19.5% | 4 | 33 |

As can be seen from table 3, coating layers comprising the organic-inorganic composite particles of example 3 reduce the DL* value and thus improve the dirt pick-up resistance (the lower the DL*value, the lower the dirt pick-up) of the coated panels. This effect is especially pronounced when the coated panels are treated with FeOx slurry. The effect increases in both cases, coated panels treated with FeOx slurry, respectively, graphite slurry, with increasing concentration of the organic-inorganic composite particles of example 3 in the coating layer.

### Example 15

Dirt-pick up behaviour and pendulum hardness of a substrate coated with coating compositions comprising the organic-inorganic composite particles of example 5, 8, 11, respectively, 13.

Two coating compositions comprising 5.8% (w/w) (composition D), respectively, 10.8% (w/w) (composition E) of the organic-inorganic composite particles of example 5 are prepared by mixing the components listed in table 4 in the order shown in table 4, stirring the mixture for 10 minutes at 2000 rpm, adding 80 g glass beads (d = 4 mm), homogenizing the mixture, and dispersing the mixture in a Scandex mixer under cooling for 1 h and removing the glass beads by filtration. Two coating compositions comprising 4.1% (w/w) (composition F), respectively, 10.1 % (w/w) (composition G) of the organic-inorganic composite particles of example 8, two coating compositions comprising 4.2% (w/w) (composition H), respectively, 10.2% (w/w) (composition I) of the organic-inorganic composite particles of example 11, and two coating compositions comprising 4.3% (w/w) (composition J), respectively, 10.5% (w/w) (composition K) of the organic-inorganic composite particles of example 13 are prepared in analogous manner (see tables 4 and 5).

A comparative coating composition (comp. composition 2, see table 6) not containing the organic-inorganic composite particles of the present invention is prepared in analogous manner.

Two further comparative coating compositions (comp. composition 3 and 4, see table 6) not containing the organic-inorganic composite particles of the present invention but organic-inorganic composite particles sold as aqueous dispersion under the tradename COL.9® by BASF are also prepared in analogous manner. COL.9® by BASF is an aquous dispersion of acrylic polymer particles in which nanoscale particles of silicium dioxide are incorporated. The composite particles ex COL.9® do not contain a covalent linkage between the acrylic polymer particles and the silicium oxide nanoparticles like the organic-inorganic composite particles of the present invention. The silicium dioxide content of the organic-inorganic composite particles ex COL.9® is 40% (w/w).

**Table 4.**

| | Composition | | | |
|---|---|---|---|---|
| | D | E | F | G |
| | Particles ex. 5 | | Particles ex. 8 | |
| **Components** | **[g]** | **[g]** | **[g]** | **[g]** |
| Water | 10.3 | 0.0 | 13.8 | 0.0 |
| 25% (w/w) aqueous dispersion of the organic-inorganic composite particles of the invention | 23.4 | 43.2 | 16.5 | 40.5 |
| Ciba® Dispex® GA40 (40% (w/w) aqueous dispersion of ammonium acrylic copolymer, dispersing agent, Ciba) | 0.5 | 0.5 | 0.5 | 0.5 |
| Tego® foamex 1488 (emulsion of a polyether siloxane copolymer, defoamer, Evonik) | 0.3 | 0.3 | 0.3 | 0.3 |
| Ciba® EFKA® 2550 (modified polydimethyl siloxane, defoamer, Ciba) | 0.2 | 0.2 | 0.2 | 0.2 |
| Kronos® 2300 (titanium dioxide, Kronos) | 22.0 | 21.6 | 22.0 | 21.6 |
| Alberdingk® AS 6002 (50% (w/w) aqueous dispersion of acrylic acid ester/styrene copolymer in water, binder, Alberdingk Boley) | 30.4 | 23.3 | 33.8 | 27.0 |
| Omyacarb® 5GU (calcium carbonate, Omya) | 10.0 | 8.3 | 10.0 | 6.9 |
| Dowanol® DPM (dipropylene glycol methylether, solvent, Dow Chemical) | 2.0 | 2.0 | 2.0 | 2.0 |
| Octylisothiazolinone (biocide, Beckmann) | 0.5 | 0.5 | 0.5 | 0.5 |
| Natrosol® 250 HR (hydroxyethylcellulose surface-treated with glyoxal, thickener, Hercules) | 0.5 | 0.5 | 0.5 | 0.5 |
| **Total components** | 100.4 | 100.1 | 100.0 | 100.0 |

**Table 5.**

| | Composition | | | |
|---|---|---|---|---|
| | H | I | J | K |
| | Particles ex. 11 | | Particles ex. 13 | |
| **Components** | **[g]** | **[g]** | **[g]** | **[g]** |
| Water | 13.7 | 0.0 | 13.4 | 0.0 |
| 25% (w/w) aqueous dispersion of the organic-inorganic composite particles of the invention | 16.6 | 40.8 | 17.2 | 42.0 |
| Ciba® Dispel® GA40 (40% (w/w) aqueous dispersion of ammonium acrylic copolymer, dispersing agent, Ciba) | 0.5 | 0.5 | 0.5 | 0.5 |
| Tego® foamex 1488 (emulsion of a polyether siloxane copolymer, defoamer, Evonik) | 0.3 | 0.3 | 0.3 | 0.3 |
| Ciba® EFKA® 2550 (modified polydimethyl siloxane, defoamer, Ciba) | 0.2 | 0.2 | 0.2 | 0.2 |
| Kronos® 2300 (titanium dioxide, Kronos) | 22.0 | 21.6 | 22.0 | 21.5 |
| Alberdingk® AS 6002 (50% (w/w) aqueous dispersion of acrylic acid ester/styrene copolymer in water, binder, Alberdingk Boley) | 33.7 | 26.8 | 33.4 | 25.9 |
| Omyacarb® 5GU (calcium carbonate, Omya) | 10.0 | 6.8 | 10.0 | 6.8 |
| Dowanol® DPM (dipropylene glycol methylether, solvent, Dow Chemical) | 2.0 | 2.0 | 2.0 | 2.0 |
| Octylisothiazolinone (biocide, Beckmann) | 0.5 | 0.5 | 0.5 | 0.5 |
| Natrosol® 250 HR (hydroxyethylcellulose surface-treated with glyoxal, thickener, Hercules) | 0.5 | 0.5 | 0.5 | 0.5 |
| **Total components** | 100.0 | 100.0 | 100.0 | 100.2 |

**Table 6.**

| | Composition | | |
|---|---|---|---|
| | Comp. 2 | Comp. 3 | Comp. 4 |
| **Components** | **[g]** | **[g]** | **[g]** |
| Water | 24.0 | 17.7 | 8.3 |
| COL.9® (35% (w/w) aqueous dispersion of organic-inorganic composite particles, BASF) | 0.0 | 14.3 | 35.7 |
| Ciba® Dispex® GA40 (40% (w/w) aqueous dispersion of ammonium acrylic copolymer, dispersing agent, Ciba) | 0.5 | 0.5 | 0.5 |
| Tego® foamex 1488 (emulsion of a polyether siloxane copolymer, defoamer, Evonik) | 0.3 | 0.3 | 0.3 |
| Ciba® EFKA® 2550 (modified polydimethyl siloxane, defoamer, Ciba) | 0.2 | 0.2 | 0.2 |
| Kronos® 2300 (titanium dioxide, Kronos) | 22.0 | 22.0 | 22.0 |
| Alberdingk® AS 6002 (50% (w/w) aqueous dispersion of acrylic acid ester/styrene copolymer in water, binder, Alberdingk Boley) | 38.0 | 32.0 | 23.0 |
| Omyacarb® 5GU (calcium carbonate, Omya) | 12.0 | 10.0 | 7.0 |
| Dowanol® DPM (dipropylene glycol methylether, solvent, Dow Chemical) | 2.0 | 2.0 | 2.0 |
| Octylisothiazolinone (biocide, Beckmann) | 0.5 | 0.5 | 0.5 |
| Natrosol® 250 HR (hydroxyethylcellulose surface-treated with glyoxal, thickener, Hercules) | 0.5 | 0.5 | 0.5 |
| **Total components** | 100.0 | 100.0 | 100.1 |

Table 7 shows the amounts by weight of the major solid components of the coating compositions of tables 4, 5 and 6 based on the weight of the sum of all major solid components.

**Table 7. ^{a}"Sum" refers to the sum of i) organic-inorganic composite particles ex COL.9®, respectively, organic-inorganic composite particles of the present invention, ii) titanium dioxide, iii) acrylic acid ester/styrene copolymer (ex Alberdingk® AS 6002) and iv) calcium carbonate. ^{b}Silicium dioxide refers to the silicium dioxide derived from the organic-inorganic composite particles ex. COL.9®, respectively, from the organic-inorganic composite particles of the present invention. ^{c}"Inorganic matter content" refers to the sum of i) silicium dioxide derived from the organic-inorganic composite particles ex. COL.9®, respectively, from the organic-inorganic composite particles of the present invention, ii) titanium dioxide and iii) calcium carbonate.**

| composition | Silicium dioxide^{b}/ sum^{a} [w/w] | Titanium dioxide/ Sum^{a} [w/w] | acrylic acid ester/styrene copolymer (ex Alberdingk® AS 6002)/ sum^{a} [w/w] | Calcium carbonate/ sum^{a} [w/w] | Sum^{a} [g] | Inorganic matter content^{c}/ sum^{a} [w/w] |
|---|---|---|---|---|---|---|
| Comp. 2 | 0 | 41.5% | 35.8% | 22.6% | 53.0 | 64.2% |
| Comp. 3 (particles ex COL.9®) | 3.8% | 41.5% | 30.2% | 18.9% | 53.0 | 64.2% |
| Comp. 4 (particles ex COL.9®) | 9.4% | 41.5% | 21.7% | 13.2% | 53.0 | 64.1% |
| D (particles ex. 5) | 4.3% | 41.4% | 28.6% | 18.8% | 53.1 | 64.5% |
| E (particles ex. 5) | 8.0% | 41.2% | - 22.3% | 15.8% | 52.4 | 65.0% |
| F (particles ex. 8) | 4.0% | 41.5% | 31.9% | 18.9% | 53.0 | 64.4% |
| G (particles ex. 8) | 10.0% | 41.5% | 25.9% | 13.2% | 52.1 | 64.2% |
| H (particles ex. 11) | 4.0% | 41.4% | 31.8% | 18.8% | 53.1 | 64.2% |
| I (particles ex. 11) | 10.1% | 41.5% | 25.8% | 13.1% | 52.0 | 64.7% |
| J (particles ex. 13) | 4.0% | 41.5% | 31.5% | 18.9% | 53.0 | 64.4% |
| K (particles ex. 13) | 10.1% | 41.5% | 25.1% | 13.1% | 51.8 | 64.7% |

For comparison reasons the sum of all major solid components, which is the sum of i) organic-inorganic composite particles ex COL.9®, respectively, organic-inorganic composite particles of the present invention, ii) titanium dioxide, iii) acrylic acid ester/styrene copolymer (ex Alberdingk® AS 6002) and iv) calcium carbonate, is kept between 51.8 g and 53.2 g

Also for comparison reasons the inorganic matter content of all major solid components, which is the sum of i) silicium dioxide derived from the organic-inorganic composite particles ex COL.9®, respectively, the organic-inorganic composite particles of the present invention, ii) titanium dioxide and iii) calcium carbonate, is kept between 64.1 to 65.0% by weight based on the sum of all major solid components, which is the sum of i) the organic-inorganic composite particles ex COL.9®, respectively, of the organic-inorganic composite particles of the present invention, ii) titanium dioxide, iii) acrylic acid ester/styrene copolymer (ex Alberdingk® AS 6002) and iv) calcium carbonate, by weight. An increase in the amount of silicium dioxide derived from the organic-inorganic composite particles of the present invention is compensated by a decrease in the amount of calcium carbonate, whereas the amount of titanium dioxide is kept constant.

As a consequence the organic matter content of the sum all major solid components, which is the sum of i) organic matter derived from the organic-inorganic composite particles ex. COL.9®, respectively, of the organic-inorganic composite particles of the present invention and ii) acrylic acid ester/styrene copolymer (ex Alberdingk® AS 6002), is also kept constant (inorganic matter content + organic matter content = 100%).

The coating compositions are applied on a coil coated aluminum panel with a 200 µm slit coater and dried for 3 days at room temperature to form a coating layer.

Artificial dirt pick-up tests are performed with black iron-oxide (33% (w/w) FeOx) and graphite (27% (w/w) graphite) slurries. Before application of the slurries color measurement of each panel is conducted. For dirt pick-up assessment the slurry are applied on the different coating samples and dried for 3 hours at room temperature. Then the panels are cleaned with tap water and a sponge. After drying color measurements of the more or less gray coating samples are performed again. Color measurements are done with spectrophotometer and calculation of L*, a*, b*, C*, h and DL* with CGREC software according DIN 6174. Results are displayed in table 6. The DL* values are given without algebraic sign.

The pendulum hardness is determined according to DIN EN ISO 1514.

**Table 8. ^{a}"Sum" refers to the sum of i) organic-inorganic composite particles ex COL.9®, respectively, organic-inorganic composite particles of the present invention, ii) titanium dioxide, iii) acrylic acid ester/styrene copolymer (ex Alberdingk® AS 6002) and iv) calcium carbonate. ^{b}Silicium dioxide refers to the silicium dioxide derived from the organic-inorganic composite particles ex COL.9®, respectively, from the organic-inorganic composite particles of the present invention.**

| Composition | Silicium dioxide^{b}/ sum^{a} [w/w] | DL* (FeOx) | DL* (graphite) | Pendulum Hardness [s] |
|---|---|---|---|---|
| Comp. 2 | 0 | 27.3 | 43.8 | 11 |
| Comp. 3 (particles ex COL.9®) | 3.8% | 29.0 | 42.9 | 10 |
| Comp. 4 (particles ex COL.9®) | 9.4% | 16.8 | 29.2 | 17 |
| D (particles ex. 5) | 4.3% | 11.8 | 38.9 | 20 |
| E (particles ex. 5) | 8.0% | 5.2 | 25.6 | 26 |
| F (particles ex. 8) | 4.0% | 18.1 | 42.4 | 14 |
| G (particles ex. 8) | 10.0% | 6.4 | 32.0 | 22 |
| H (particles ex. 11) | 4.0% | 14.1 | 41.7 | 16 |
| I (particles ex. 11) | 10.1% | 3.8 | 20.4 | 29 |
| J (particles ex. 13) | 4.0% | 14.8 | 41.4 | 17 |
| K (particles ex. 13) | 10.1% | 3.8 | 20.1 | 30 |

As can be seen from table 8, coating layers comprising the organic-inorganic composite particles of the present invention reduce the DL* value and thus improve the dirt pick-up resistance (the lower the DL*value, the lower the dirt pick-up) of the coated panels. This effect is especially pronounced when the coated panels are treated with FeOx slurry. The effect increases in both cases, coated panels treated with FeOx slurry, respectively, graphite slurry, with increasing concentration of the organic-inorganic composite particles of the present invention in the coating layer. In addition, the hardness of the coating layers comprising the organic-inorganic composite particles of the present invention is also improved.

### Example 16

### Artifical and Real Dirt-pick up behaviour of a substrate coated with coating compositions comprising the organic-inorganic composite particles of example 3

A coating compositions comprising 5.3% by weight of the organic-inorganic composite particles of example 3 based on the total coating composition by weight, are prepared by mixing the components listed in table 9 in the order shown in table 9, stirring the mixture for 10 minutes at 2000 rpm, adding 80 g glass beads (d = 4 mm), homogenizing the mixture, dispersing the mixture in a Scandex mixer under cooling for 1 h and removing the glass beads by filtration.

A comparative coating composition (comp. composition 5, see table 9) not containing the organic-inorganic composite particles of example 3 is prepared in analogous manner.

One further comparative coating composition (comp.composition 6, see table 9) not containing the organic-inorganic composite particles of the present invention but organic-inorganic composite particles sold as aqueous dispersion under the tradename COL.9® by BASF are also prepared in analogous manner.

**Table 9.**

| | Composition | | |
|---|---|---|---|
| | Comp. 5 | L | Comp. 6 |
| **Components** | **[g]** | **[g]** | **[g]** |
| Water (deionized) | 17.9 | 17.9 | 17.9 |
| Ciba® Dispex® GA40 (40% (w/w) aqueous dispersion of ammonium acrylic copolymer, dispersing agent, Ciba) | 0.5 | 0.5 | 0.5 |
| Tego® foamex 1488 (emulsion of a polyether siloxane copolymer, defoamer, Evonik) | 0.3 | 0.3 | 0.3 |
| Ciba® EFKA® 2550 (modified polydimethyl siloxane, defoamer, Ciba) | 0.2 | 0.2 | 0.2 |
| Kronos® 2300 (titanium dioxide, Kronos) | 22.0 | 22.0 | 22.0 |
| Omyacarb® 5GU (calcium carbonate, Omya) | 12.0 | 12.0 | 12.0 |
| Preventol® MP100 (3-iodine-2-propynyl butyl carbonate, fungicide, Lanxess) | 0.2 | 0.2 | 0.2 |
| Preventol® BCM (methyl-*N*-(1*H*-benzimidazol-2-yl)-carbamate, fungicide, Lanxess) | 0.2 | 0.2 | 0.2 |
| Ciba® Irgaguard® D 1071 (N'-isobutyl-N-cyclopropyl-6-(methylthio)-1,3,5-triazine-2,4-diamine, algicide, Ciba) | 0.2 | 0.2 | 0.2 |
| Water (deionized) | 5.5 | 5.5 | 5.5 |
| Dowanol® DPM (dipropylene glycol methylether, solvent, Dow Chemical) | 2.0 | 2.0 | 2.0 |
| Octylisothiazolinone (biocide, Beckmann) | 0.5 | 0.5 | 0.5 |
| Alberdingk® AS 6002 (50% (w/w) aqueous dispersion of acrylic acid ester/styrene copolymer in water, binder, Alberdingk Boley) | 38.0 | 38.0 | 38.0 |
| AMP 90 (90% (w/w) aqeous solution of 2-amino-2-methyl-propan-1-ol, neutralizing agent) | - | - | 0.2 |
| 20% (w/w) aqueous dispersion of the organic-inorganic composite particles of example 3 | | 26.5 | - |
| COL.9® (35% (w/w) aqueous dispersion of organic-inorganic composite particles, BASF) | - | - | 15.1 |
| Natrosol® 250 HR (hydroxyethylcellulose surface-treated with glyoxal, thickener, Hercules) | 0.5 | 0.5 | - |
| Ciba® Rheovis® PU 10 (thickener, Ciba) | - | - | 1.0 |
| **Total components** | 100.0 | 126.5 | 115.8 |

Table 10 shows the amounts by weight of the major solid components of the coating compositions of table 9 based on the weight of the sum of all major solid components.

**Table 10. ^{a}"Sum" refers to the sum of i) organic-inorganic composite particles ex COL.9®, respectively, organic-inorganic composite particles of the present invention, ii) titanium dioxide, iii) acrylic acid ester/styrene copolymer (ex Alberdingk® AS 6002) and iv) calcium carbonate.**

| composition | organic-inorganic composite particles / sum^{a} [w/w] | Titanium dioxide/ Sum^{a} [w/w] | acrylic acid ester/styrene copolymer (ex Alberdingk® AS 6002)/ sum^{a} [w/w] | Calcium carbonate/ sum^{a} [w/w] | Sum^{a} [g] |
|---|---|---|---|---|---|
| Comp. 5 | 0 | 41.5% | 35.8% | 22.6% | 53.0 |
| L (particles ex. 3) | 9.1% | 37.7% | 32.6% | 20.6% | 58.3 |
| Comp. 6 (particles ex COL.9®) | 9.1% | 37.7% | 32.6% | 20.6% | 58.3 |

For artificial dirt pick-up tests the coating compositions are applied on a coil coated aluminum panel with a 200 µm slit coater and dried for 3 days at room temperature to form a coating layer.

Artificial dirt pick-up tests are performed with black iron-oxide (33% (w/w) FeOx) and graphite (27% (w/w) graphite) slurries. Before application of the slurries color measurement of each panel is conducted. For dirt pick-up assessment the slurries are applied on the coating samples and dried for 3 hours at room temperature. Then the panels are cleaned with tap water and a sponge. After drying color measurements of the more or less gray coating samples are performed again. Color measurements are done with a spectrophotometer and calculation of L*, a*, b*, C*, h and DL* with CGREC software according DIN 6174. Results are displayed in table 11. The DL* values are given without algebraic sign.

For real dirt pick-up tests the coating compositions are applied four times on cementious fibre boards with a roller and dried for one week. The coated cementious fibre boards are exposed to the natural environment (such as wind, rain, dust) in Shanghai (China) for three months starting from December 2008 until February 2009. Then color measurements are done with a spectrophotometer and calculation of L*, a*, b*, C*, h and DL* with CGREC software according DIN 6174. Results are displayed in table 11. The DL* values are given without algebraic sign.

**Table 11. ^{a}"Sum" refers to the sum of i) organic-inorganic composite particles ex COL.9®, respectively, organic-inorganic composite particles of the present invention, ii) titanium dioxide, iii) acrylic acid ester/styrene copolymer (ex Alberdingk® AS 6002) and iv) calcium carbonate.**

| Composition | organic-inorganic composite particles /sum^{a} [w/w] | Artificial dirt pick-up test | | Real dirt pick-up test |
|---|---|---|---|---|
| | | DL* (FeOx) | DL* (graphite) | DL* |
| Comp. 5 | 0 | 17.6 | 41.7 | 10.6 |
| L (particles ex. 3) | 9.1% | 8.0 | 38.1 | 9.0 |
| Comp. 6 (particles ex COL.9®) | 9.1% | 19.3 | 40.4 | 10.1 |

As can be seen from table 11, coating layers comprising the organic-inorganic composite particles of example 3 reduce the DL* value and thus improve the dirt pick-up resistance (the lower the DL*value, the lower the dirt pick-up) of the coated cementious fibre boards. This effect is especially pronounced in the artificial dirt pick-up test wherein the coated cementious fibre boards are treated with FeOx slurry, but is also evident in the artificial dirt pick-up test wherein the coated cementious fibre boards are treated with graphite as well as in the real dirt pick-up tests.

## Claims

1. Organic-inorganic composite particles having an average diameter of 60 to 12'000 nm, wherein the organic-inorganic composite particles are obtainable by reacting particles A, which are particles carrying at least one functional group Ra, with particles B, which are particles carrying at least one functional group Rb, under formation of a covalent linkage between particles A and particles B.

2. The organic-inorganic composite particles of claim 1, wherein particles A have an average diameter of 50 to 10'000 nm.

3. The organic-inorganic composite particles of claim 1 or claim 2, wherein particles B have an average diameter of 5 to 1'000 nm.

4. The organic-inorganic composite particles of any of claims 1 to 3, wherein the average diameter ratio of particles A/particles B is from 1.2/1 to 50/1.

5. The organic-inorganic composite particles of any of claims 1 to 4, wherein the organic-inorganic composite particles have an organic matter content of 10 to 90% by weight based on the weight of the organic-inorganic composite particles

6. The organic-inorganic composite particles of any of claims 1 to 5, wherein particles A comprise an organic polymer Pa.

7. The organic-inorganic composite particles of claim 6, wherein the organic polymer Pa is an organic polymer Pa1, which is an organic polymer carrying at least one functional group Ra.

8. The organic-inorganic composite particles of claim 7, wherein the organic polymer carrying at least one functional group Ra is a butadiene-based polymer, which has been chemically modified by grafting thereon a polymer carrying at least one functional group Ra.

9. The organic-inorganic composite particles of claim 8, wherein the butadiene-based polymer, which has been chemically modified by grafting thereon a polymer carrying at least one functional group Ra, is prepared by polymerizing at least one ethylenically unsaturated monomer carrying at least one functional group Ra, at least one ethylenically unsaturated monomer carrying at least two ethylenically unsaturated groups, and optionally further ethylenically unsaturated monomers, in the presence of a butadiene-based polymer and an initiator.

10. The organic-inorganic composite particles of any of claims 1 to 5, wherein particles B comprise an inorganic material Ib.

11. The organic-inorganic composite particles of claim 10, wherein the inorganic material Ib is an inorganic material Ib2, which is surrounded by a shell polymer Sb, which is a polymer carrying at least one functional group Rb.

12. A process for the preparation of the organic-inorganic composite particles of claims 1 to 11, which process comprises the step of i) reacting particles A with particles B under formation of a covalent linkage between particles A and particles B.

13. A composition comprising the organic-inorganic composite particles of any of claims 1 to 11, a solvent and a binder.

14. A process for the preparation of the composition of claim 13, which process comprises the step of
i) mixing the solvent, the organic-inorganic composite particles and the binder.

15. A substrate coated with the composition of claim 13.

16. A process for forming the coated substrate of claim 15, which process comprises the steps of i) applying the composition of claim 13 to a substrate and ii) forming a coating-layer.

17. Use of the organic-inorganic composite particles of claims 1 to 11 in architectural coating compositions.

18. Use of the composition of claim 13 as architectural coating composition.

## Patentansprüche

1. Organisch-anorganische Verbund-Teilchen mit einem mittleren Durchmesser von 60 bis 12 000 nm, wobei die organisch-anorganischen Verbund-Teilchen durch Umsetzen von Teilchen A, welche Teilchen sind, die mindestens eine funktionelle Gruppe Ra tragen, mit Teilchen B, welche Teilchen sind, die mindestens eine funktionelle Gruppe Rb tragen, unter Bildung einer kovalenten Bindung zwischen Teilchen A und Teilchen B erhältlich sind.

2. Organisch-anorganische Verbund-Teilchen nach Anspruch 1, wobei Teilchen A einen mittleren Durchmesser von 50 bis 10 000 nm aufweisen.

3. Organisch-anorganische Verbund-Teilchen nach Anspruch 1 oder Anspruch 2, wobei Teilchen B einen mittleren Durchmesser von 5 bis 1 000 nm aufweisen.

4. Organisch-anorganische Verbund-Teilchen nach einem der Ansprüche 1 bis 3, wobei das Verhältnis der mittleren Durchmesser von Teilchen A / Teilchen B von 1,2 / 1 bis 50 / 1 ist.

5. Organisch-anorganische Verbund-Teilchen nach einem der Ansprüche 1 bis 4, wobei die organisch-anorganischen Verbund-Teilchen einen Gehalt an organischen Stoffen von 10 bis 90 Gew.-%, basierend auf dem Gewicht der organisch-anorganischen Verbund-Teilchen, aufweisen.

6. Organisch-anorganische Verbund-Teilchen nach einem der Ansprüche 1 bis 5, wobei Teilchen A ein organisches Polymer Pa umfassen.

7. Organisch-anorganische Verbund-Teilchen nach Anspruch 6, wobei das organische Polymer Pa ein organisches Polymer Pa1 ist, welches ein organisches Polymer ist, das mindestens eine funktionelle Gruppe Ra trägt.

8. Organisch-anorganische Verbund-Teilchen nach Anspruch 7, wobei das organische Polymer, das mindestens eine funktionelle Gruppe Ra trägt, ein auf Butadien basierendes Polymer ist, welches durch Aufpfropfen eines Polymers, das mindestens eine funktionelle Gruppe Ra trägt, chemisch modifiziert wurde.

9. Organisch-anorganische Verbund-Teilchen nach Anspruch 8, wobei das auf Butadien basierende Polymer, welches durch Aufpfropfen eines Polymers, das mindestens eine funktionelle Gruppe Ra trägt, chemisch modifiziert wurde, durch Polymerisieren mindestens eines ethylenisch ungesättigten Monomers, das mindestens eine funktionelle Gruppe Ra trägt, mindestens eines ethylenisch ungesättigten Monomers, das mindestens zwei ethylenisch ungesättigte Gruppen trägt, und gegebenenfalls weiteren ethylenisch ungesättigten Monomeren, in Gegenwart von einem auf Butadien basierenden Polymer und einem Starter hergestellt wird.

10. Organisch-anorganische Verbund-Teilchen nach einem der Ansprüche 1 bis 5, wobei Teilchen B ein anorganisches Material Ib umfassen.

11. Organisch-anorganische Verbund-Teilchen nach Anspruch 10, wobei das anorganische Material Ib ein anorganisches Material Ib2 ist, welches von einem Schale-Polymer Sb umgeben ist, welches ein Polymer ist, das mindestens eine funktionelle Gruppe Rb trägt.

12. Verfahren zur Herstellung der organisch-anorganischen Verbund-Teilchen nach Ansprüchen 1 bis 11, wobei das Verfahren den Schritt von i) Umsetzen von Teilchen A mit Teilchen B unter Bildung einer kovalenten Bindung zwischen Teilchen A und Teilchen B umfasst.

13. Zusammensetzung, umfassend die organisch-anorganischen Verbund-Teilchen nach einem der Ansprüche 1 bis 11, ein Lösungsmittel und ein Bindemittel.

14. Verfahren zur Herstellung der Zusammensetzung nach Anspruch 13, wobei das Verfahren den Schritt von i) Mischen des Lösungsmittels, der organisch-anorganischen Verbund-Teilchen und des Bindemittels umfasst.

15. Substrat, beschichtet mit der Zusammensetzung nach Anspruch 13.

16. Verfahren zum Bilden des beschichteten Substrats nach Anspruch 15, wobei das Verfahren die Schritte von i) Auftragen der Zusammensetzung nach Anspruch 13 auf ein Substrat und ii) Bilden einer Beschichtungs-Schicht umfasst.

17. Verwendung der organisch-anorganischen Verbund-Teilchen nach Ansprüchen 1 bis 11 in Beschichtungs-Zusammensetzungen für Bauzwecke.

18. Verwendung der Zusammensetzung nach Anspruch 13 als Beschichtungs-Zusammensetzung für Bauzwecke.

## Revendications

1. Particules composites organiques-inorganiques ayant un diamètre moyen de 60 à 12 000 nm, les particules composites organiques-inorganiques pouvant être obtenues en faisant réagir des particules A, qui sont des particules portant au moins un groupe fonctionnel Ra, avec des particules B, qui sont des particules portant au moins un groupe fonctionnel Rb, avec formation d'une liaison covalente entre particules A et particules B.

2. Particules composites organiques-inorganiques selon la revendication 1, les particules A ayant un diamètre moyen de 50 à 10 000 nm.

3. Particules composites organiques-inorganiques selon la revendication 1 ou la revendication 2, les particules B ayant un diamètre moyen de 5 à 1000 nm.

4. Particules composites organiques-inorganiques selon l'une quelconque des revendications 1 à 3, le rapport entre diamètres moyens des particules A et des particules B étant de 1,2/1 à 50/1.

5. Particules composites organiques-inorganiques selon l'une quelconque des revendications 1 à 4, les particules composites organiques-inorganiques ayant une teneur en matière organique de 10 à 90 % en poids, rapporté au poids des particules composites organiques-inorganiques.

6. Particules composites organiques-inorganiques selon l'une quelconque des revendications 1 à 5, les particules A comprenant un polymère organique Pa.

7. Particules composites organiques-inorganiques selon la revendication 6, le polymère organique Pa étant un polymère organique Pa1, qui est un polymère organique portant au moins un groupe fonctionnel Ra.

8. Particules composites organiques-inorganiques selon la revendication 7, le polymère organique portant au moins un groupe fonctionnel Ra étant un polymère à base de butadiène qui a été modifié chimiquement en greffant sur celui-ci un polymère portant au moins un groupe fonctionnel Ra.

9. Particules composites organiques-inorganiques selon la revendication 8, le polymère à base de butadiène qui a été modifié chimiquement en greffant sur celui-ci un polymère portant au moins un groupe fonctionnel Ra étant préparé en polymérisant au moins un monomère éthyléniquement insaturé portant au moins un groupe fonctionnel Ra, au moins un monomère éthyléniquement insaturé portant au moins deux groupes éthyléniquement insaturés, et éventuellement d'autres monomères éthyléniquement insaturés, en présence d'un polymère à base de butadiène et d'un initiateur.

10. Particules composites organiques-inorganiques selon l'une quelconque des revendications 1 à 5, les particules B comprenant un matériau inorganique Ib.

11. Particules composites organiques-inorganiques selon la revendication 10, le matériau inorganique Ib étant un matériau inorganique Ib2, qui est entouré par un polymère de coquille Sb, qui est un polymère portant au moins un groupe fonctionnel Rb.

12. Procédé de préparation des particules composites organiques-inorganiques des revendications 1 à 11, lequel procédé comprend l'étape consistant à i) faire réagir des particules A avec particules B avec formation d'une liaison covalente entre particules A et particules B.

13. Composition comprenant les particules composites organiques-inorganiques de l'une quelconque des revendications 1 à 11, un solvant et un liant.

14. Procédé de préparation de la composition de la revendication 13, lequel procédé comprend l'étape consistant à i) mélanger le solvant, les particules composites organiques-inorganiques et le liant.

15. Substrat revêtu avec la composition de la revendication 13.

16. Procédé de formation du substrat revêtu de la revendication 15, lequel procédé comprend les étapes consistant à i) appliquer la composition de la revendication 13 à un substrat et ii) former une couche de revêtement.

17. Utilisation des particules composites organiques-inorganiques des revendications 1 à 11 dans des compositions de revêtement architectural.

18. Utilisation de la composition de la revendication 13 comme composition de revêtement architectural.
